# EUROPEAN PATENT SPECIFICATION

(11) **EP 4 295 588 B1**
(45) Date of publication and mention of the grant of the patent: **10.09.2025**
(21) Application number: 21709643.7
(22) Date of filing: 01.03.2021
(51) Int. Cl.: H04W 4/02, H04W 8/22, G01S 5/02, H04W 64/00, H04W 8/18, G01S 1/04, H04W 76/14, H04W 88/04, H04W 92/18

(54) **APPARATUS FOR SIDELINK POSITIONING**
VORRICHTUNG ZUR SIDELINK-POSITIONIERUNG
APPAREIL DE POSITIONNEMENT DE LIAISON LATÉRALE

(43) Date of publication of application: 27.12.2023
(73) Proprietor: Huawei Technologies Co., Ltd., Shenzhen, Guangdong 518129 (CN)
(72) Inventor: WEI, Qing, 80992 Munich (DE); WANG, Qi, 80992 Munich (DE)
(74) Representative: Goddar, Heinz J.
(86) International application number: PCT/EP2021/055026
(87) International publication number: WO 2022/184227

(56) References cited:
- US-A1- 2017 359 713
- "3rd Generation Partnership Project; Technical Specification Group Services and System Aspects; 5G System (5GS) Location Services (LCS); Stage 2 (Release 16)", 3GPP STANDARD; TECHNICAL SPECIFICATION; 3GPP TS 23.273, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V16.0.0, 11 June 2019 (2019-06-11), pages 1 - 86, XP051753949

## Description

### TECHNICAL FIELD

The present disclosure relates to techniques for sidelink positioning, in particular to methods and apparatuses for sidelink positioning in a mobile communication network based on capability of a user device. The disclosure particularly relates to location reference management in cellular mobile networks.

### BACKGROUND

Localization has been identified as one of the potential enabling technologies of the next generation wireless networks. According to the study carried out by 3GPP technical report, see 3GPP TR 38.855, the new features introduced in 5G New Radio (NR) such as high frequency bands (e.g. 6GHz or above) and utilization of massive antenna arrays provides additional degrees of freedom to substantially improve the positioning accuracy. However, given the stringent location requirements of commercial use cases, especially for industry verticals, currently existing technologies show its limits. Current radio access technology (RAT) dependent positioning techniques rely on the measurements obtained using the reference signals transmitted in the downlink and/or uplink, namely between a target device and one or multiple reference radio access network (RAN) node, e.g. base stations. This poses a performance limit to localization given the network deployment in terms of coverage and density.

RAT-dependent positioning provided by cellular mobile networks relies on the network deployment, namely fixed installed base stations or transmit-receive-points (TRPs) which are utilized as positioning reference nodes. Typically, the network deployment is optimized in a way that mainly the performance requirements of data communication can be met. For positioning where coverage from multiple reference nodes are required, a typical network deployment for communication may not be sufficient.

US 2017/0359713 A1 describes that a wireless device that is a candidate for operating in cooperative positioning activates that mode in response to detecting a warning situation. A wireless communication network provides warning situation detection and/or control of the cooperative positioning mode. The wireless communication network maintains a database identifying those wireless devices within a given service area that are cooperative positioning mode candidates, for example, the devices having D2D communication capability and operational configurations that allow such operation.

The ETSI TS 123 273 v16.4.0 "5G System (5GS) Location Service (LCS); State 2 (3GPP TS 23.273 version 16.4.0 Release 16)" describes, amongst others, the 5G architectural reference model, the content of UE location services privacy policy, and a UE assisted and UE based positioning procedure.

### SUMMARY

The invention is defined by the independent claims. Advantageous embodiments of the invention are given by the dependent claims.

It is an objective of this disclosure to improve performance of localization in mobile communication networks.

A further objective is to improve location reference management from the core network's perspective.

One or more of these objectives is achieved by the features of the independent claims. Further implementation forms are apparent from the dependent claims, the description and the figures.

A basic idea of this disclosure is to include location reference management functionality in one or multiple network functions in a cellular mobile network, e.g. AMF. The functionality consists of three aspects: a) Maintain UE-type location reference information as a part of the UE profile; b) Activate and deactivate a UE-type location reference by an external/internal entity; and c) Provide location reference information to an external/internal entity.

According to a first aspect, the disclosure relates to a network entity for managing user profile data of at least one first user device in a mobile communication network, the network entity comprising: a communication interface, configured to obtain location reference capability information of the first user device, wherein the location reference capability information indicates the first user device is capable of assisting positioning for a second user device; and a processor, configured to store the location reference capability information in the network entity. The location reference capability information comprises one or more parameters for positioning measurement, and the one or more parameters for positioning measurement comprise a number of antenna reference points.

The network entity can manage user profile data of multiple first user devices (at least one first user device). However, the location reference capability information that is obtained by the communication interface, refers to the location reference capability information of a specific first user device of these multiple first user devices. This specific first user device can be identified by a location reference identity as defined below. So, each first user device has user profile data and at least one user profile data is stored in the network entity, e.g. in a database of the network entity.

Such a network entity allows a mobile communication network to provide better positioning performance based on location reference capability information of multiple first user devices. The network entity can indicate by the location reference capability information whether a first user device is capable of assisting positioning for a second user device.

In an exemplary implementation of the network entity, the processor is configured to store the location reference capability information within the user profile data of the first user device in the network entity.

This provides the advantage that the location reference capability information is integrated in the user profile data of the first user device and by requesting the user profile data it is efficiently indicated whether the first user device is capable of assisting positioning for a second user device.

In an exemplary implementation of the network entity, the processor is configured to store the location reference capability information in the network entity based on a location reference identity identifying the first user device.

This provides the advantage that the location reference capability information can be efficiently identified and accessed, e.g. by a search request.

In an exemplary implementation of the network entity, the user profile data of the first user device comprises a state indication indicative of whether the first user device is activated or deactivated as a location reference.

This provides the advantage that the user profile efficiently indicates whether the first user device is activated or deactivated as location reference.

In an exemplary implementation of the network entity, the user profile data of the first user device comprises a privacy profile indicative of privacy data of the first user device.

This provides the advantage that the first user device may decide based on its privacy profile whether to serve as a location reference.

In an exemplary implementation of the network entity, the privacy profile comprises information indicative of whether the first user device is capable of at least one of: serving as a location reference allowed without notifying a user of the first user device, serving as a location reference allowed with notification to the user of the first user device, serving as a location reference requires notification and verification by the user of the first user device, serving as a location reference is allowed only if granted by the user of the first user device or if there is no response to the notification, serving as a location reference requires notification and verification by the user of the first user device, serving as a location reference is allowed only if granted by the user of the first user device.

This provides the advantage that the privacy profile can be flexible created considering different use cases.

In an exemplary implementation of the network entity, the network entity comprises a unified data management, UDM, entity.

This provides the advantage that this new functionality can be efficiently integrated in 3GPP standardization.

In an exemplary implementation of the network entity, the communication interface is configured to receive from a second network entity of the mobile communication network a request message requesting a capability information of the first user device, wherein the capability information comprises the location reference capability information, and the request message comprises a location reference identity.

This provides the advantage that the second network entity, e.g. an AMF, can efficiently access to the capability information, including the location reference capability information, of the at least one user device.

The network entity may respond with the requested capability information. For example, the following steps may be performed: When the received location reference identity corresponds to a location reference identity associated with the location reference capability information stored in the network entity, the processor may be configured to retrieve the location reference capability information from the network entity and the communication interface may be configured to transmit a response message to the second network entity, the response message comprising the capability information with the retrieved location reference capability information.

In an exemplary implementation of the network entity, the second network entity comprises an access and mobility management function, AMF, entity.

This provides the advantage that this new functionality can be efficiently integrated in 3GPP standardization.

In an exemplary implementation of the network entity, the location reference capability information further comprises at least one of: one or more parameters for positioning reference signal transmission, location information, and a capability for location determination indicating whether the first user device is capable of calculating a position of another device.

This provides the advantage that the network entity is informed about all relevant parameters that may be important for enabling a first user device as a location reference. Based on the location reference capability in terms of assisting positioning measurements and/or determination, whether or how to use the first user device as a location reference can be determined.

In an exemplary implementation of the network entity, the one or more parameters for positioning measurement further comprise at least one of: a list of supported frequency bands for positioning signal measurements, a number of frequency layer for the positioning signal measurements, a plurality of supported types of positioning signal measurements, a number of each type supported per first user device, and one or more parameters of each antenna reference point.

This provides the advantage that based on the positioning measurement parameters, whether or how to use the first user device as a location reference can be flexibly determined. In particular, whether the first user device is capable of assist positioning of a second user device by obtaining positioning measurements.

In an exemplary implementation of the network entity, the one or more parameters for positioning reference signal transmission comprise at least one of: a list of supported frequency bands for positioning signal transmission, a number of frequency layer for the positioning signal transmission, a number of antenna reference points for the positioning signal transmission, one or more parameters of each antenna reference point, one or more transmit power related parameters.

This provides the advantage that based on the positioning reference signal transmission parameters, whether or how to use the first user device as a location reference can be flexibly determined. In particular, whether the first user device is capable of assist positioning of a second user device by transmitting positioning reference signals.

In an exemplary implementation of the network entity, the location information comprises at least one of: a location estimate of the first user device, a velocity estimate of the first user device, a location source, a location time stamp, an indication whether the first user device is manufactured as a location reference, a time duration for which the location information is valid.

This provides the advantage that the network entity is informed about all details of the location information associated with the first user device. Based on the location information, whether or how to use the first user device as a location reference can be flexibly determined. In particular, whether the first user device is capable of assist positioning of a second user device in a global geographic coordinate system.

In an exemplary implementation of the network entity, the processor is configured to store the location reference capability information within the user profile data of the first user device based on one of: a network registration of the first user device; a configuration of the first user device as a location reference by an application function, AF, entity; or a configuration of the first user device as a location reference by a location management function, LMF, entity.

This provides the advantage that the location reference capability information can be flexibly obtained.

The location reference capability information and the user profile data are related to a specific UE and this specific UE is one of the UEs which user profile data and location reference capability information are stored in a database of the network entity.

In an exemplary implementation of the network entity, the processor is configured to update the state indication in the user profile data of the first user device based on an activation or deactivation of the user device as a location reference.

This provides the advantage that a first user device can be flexibly activated or deactivated as a location reference.

According to a second aspect, the disclosure relates to a second network entity for positioning operation, the second network entity comprising: a communication interface, configured to transmit a request message to a network entity of the mobile communication network, wherein the request message requesting a capability information of at least one user device, wherein the capability information comprises location reference capability information, and wherein the location reference capability information indicates the at least one first user device is capable of assisting positioning for a second user device, and, receive a location reference response from the network entity, wherein the location reference response comprising a location reference capability information of the at least one first user device.

Such a second network entity may obtain location reference capability information of one or multiple first user devices and determines whether or how to use the first user devices as location reference. In particular, the second network entity improves location reference management from the core network's perspective.

In an exemplary implementation of the second network entity, the request message comprises a location reference identity identifying the first user device.

This provides the advantage that the location reference capability information can be efficiently identified and accessed, e.g. by a search request.

In an exemplary implementation of the second network entity, the location reference response comprises a state indication indicative of whether the at least one first user device is activated or deactivated as a location reference.

This provides the advantage that the user profile efficiently indicates whether the first user device is activated or deactivated as location reference.

In an exemplary implementation of the second network entity, the location reference response comprises a privacy profile indicative of privacy data of the at least one first user device.

This provides the advantage that the first user device may decide based on its privacy profile whether to serve as a location reference.

The request message transmitted by a second network entity may request capability information for location reference capability information, state indication and privacy data in one single message or in separate messages, each message requesting a respective item, i.e. location reference capability information, state indication or privacy data. Correspondingly the location reference response may be a single message including the requested items or it may be separate messages individually providing the requested items.

In an exemplary implementation of the second network entity, the privacy profile comprises information indicative of whether the at least one first user device is capable of at least one of: serving as a location reference allowed without notifying a user of the at least one first user device, serving as a location reference allowed with notification to the user of the at least one first user device, serving as a location reference requires notification and verification by the user of the at least one first user device, serving as a location reference is allowed only if granted by the user of the at least one first user device or if there is no response to the notification, serving as a location reference requires notification and verification by the user of the at least one first user device, serving as a location reference is allowed only if granted by the user of the at least one first user device.

This provides the advantage that the privacy profile can be flexible created considering different use cases.

In an exemplary implementation of the second network entity, the second network entity comprises an access and mobility management function, AMF, entity.

This provides the advantage that this new functionality can be efficiently integrated in 3GPP standardization.

In an exemplary implementation of the second network entity, the network entity comprises a unified data management, UDM, entity.

This provides the advantage that this new functionality can be efficiently integrated in 3GPP standardization.

In an exemplary implementation of the second network entity, the communication interface is configured to receive a location request message of the second user device, the location request message comprising a type of request, wherein the type of request is indicative of an estimated location or location reference information.

This provides the advantage that based on the type, it is efficiently indicated whether the location reference information is required or whether a usual location estimate is required. In particular the legacy location request message can be reused to obtain location reference information.

The location request message may be initiated by the second user device ("of the second user device") but it is not necessarily received directly from the second user device. Some intermediate device may be used to transmit the location request message.

In an exemplary implementation of the second network entity, the location request message comprises geographical information indicative of an area of interest in which at least one first user device is required being capable of serving as a location reference for assisting positioning of the second user device.

This provides the advantage that based on this geographical information only location reference UEs that are located in this specific geographic area, e.g. close to the target UE may be activated or provided to the second user device.

In an exemplary implementation of the second network entity, the location request message is a Mobile-Originated Location Request, MO-LR, message transmitted from the second user device to the second network entity, or a location request message from a third network entity to the second network entity upon request of the second user device for assistance data.

This provides the advantage that the second user device can request location reference information from the second network entity.

In an exemplary implementation of the second network entity, the communication interface is configured to receive a location request message from the third network entity, wherein the third network entity comprises a location management function, LMF, network entity.

This provides the advantage that an LMF entity can request location reference information from the second network entity.

In an exemplary implementation of the second network entity, the communication interface is configured to activate or deactivate the at least one first user device as a location reference based on a location reference request from: a fourth network entity or, the at least one first user device requesting an activation or deactivation of the at least one first user device, or, an external client or an application function entity, or based on an event indicating a deferred activation or deactivation of the at least one first user device.

This provides advantage that one or multiple first user devices can be dynamically activated and deactivated as location references according to the requirements of the use cases, leading to scalable positioning performance and efficient energy consumption. In particular, the first user devices activated as location references complement to the fixed RAN node deployment, therefore improves performance of localization in mobile communication networks.

The fourth network entity may be for example a GMLC or an LMF. The fourth network entity request the location reference functionality of some UE, the AMF activate or deactivate the location reference UE.

This provides the advantage that the location request can be transmitted by other network entities such as GMLC or LMF.

In an exemplary implementation of the second network entity, the location reference request comprising at least one of the following: one or more location reference identities identifying first user devices, a number of first user devices capable of assisting positioning for the second user device, geographical information, time information, triggering conditions.

This provides the advantage that the second network entity can activate or deactivate one or multiple first user devices as location reference according to the requirements of the entity requested.

According to a third aspect, the disclosure relates to a first user device, comprising a communication interface configured to: receive from a second network entity a request for capability information of the first user device; and transmit a response to the second network entity, the response comprising the capability information of the first user device, wherein the capability information comprises location reference capability information which indicates the first user device is capable of assisting positioning for a second user device. The location reference capability information comprises one or more parameters for positioning measurement, and the one or more parameters for positioning measurement comprise a number of antenna reference points.

Such a first user device improves performance of localization in mobile communication networks. In particular, the first user device can efficiently inform the second network entity whether the first user device is capable of assisting positioning for the second user device

In an exemplary implementation of the first user device, the location reference capability information further comprises at least one of: one or more parameters for positioning reference signal transmission, location information, and a capability for location determination indicating whether the first user device is capable of calculating a position of another device.

This provides the advantage that the mobile communication network is informed about all relevant parameters that may be important for enabling a first user device as a location reference. Based on the location reference capability in terms of assisting positioning measurements and/or determination, whether or how to use the first user device as a location reference can be determined.

In an exemplary implementation of the first user device, the one or more parameters for positioning measurement further comprise at least one of: a list of supported frequency bands for positioning signal measurements, a number of frequency layer for the positioning signal measurements, a plurality of supported types of positioning signal measurements, a number of each type supported per first user device, and one or more parameters of each antenna reference point.

In an exemplary implementation of the first user device, the one or more parameters for positioning reference signal transmission comprise at least one of: a list of supported frequency bands for positioning signal transmission, a number of frequency layer for the positioning signal transmission, a number of antenna reference points for the positioning signal transmission, one or more parameters of each antenna reference point, one or more transmit power related parameters.

In an exemplary implementation of the first user device, the location information comprises at least one of: a location estimate of the first user device, a velocity estimate of the first user device, a location source, a location time stamp, an indication whether the first user device is manufactured as a location reference, a time duration for which the location information is valid.

According to a fourth aspect, the disclosure relates to a method for managing user profile data of at least one first user device in a mobile communication network, the method comprising: obtaining location reference capability information of the first user device, wherein the location reference capability information indicates the first user device is capable of assisting positioning for a second user device; and storing the location reference capability information in a network entity.

According to a fifth aspect, the disclosure relates to a method for providing user profile data of at least one first user device in a mobile communication network, the method comprising: transmitting a request for location reference capability information of the at least one first user device to a network entity of the mobile communication network, wherein the location reference capability information indicates the at least one first user device is capable of assisting positioning for a second user device, and, receiving a response from the network entity, the response comprising the location reference capability information.

According to a sixth aspect, the disclosure relates to a computer program product including computer executable code or computer executable instructions that, when executed, causes at least one computer to execute the method according to the fourth or fifth aspect.

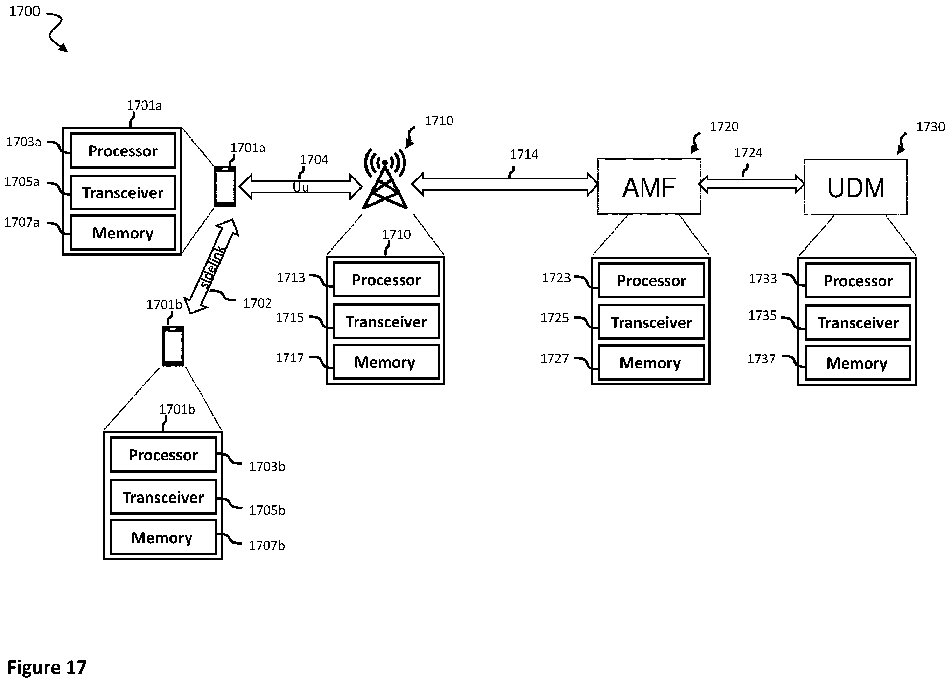

The computer program product may run on any of the components of a communication system described below with respect to Figure 17. For example, the computer program product may run on a user device 1701a as shown in Figure 17. Such a user device may comprises a processing circuitry 1703a for instance, a processor 1703a, for processing and generating data, e.g. the program code described above, a transceiver 1705a, including, for instance, an transmitter, a receiver and an antenna, for exchanging data with the other components of the communication system 1700, and a non-transitory memory 1707a for storing data, e.g. the program code described above. The computer program product may also run on a second user device 1701b as shown in Figure 17. The computer program product may also run on a network device 1720 such as a base station as shown in Figure 17.

According to a seventh aspect, the disclosure relates to a computer readable medium storing instructions that, when executed by a computer, cause the computer to execute the method according to the fourth or fifth aspect. Such a computer readable medium may be a non-transient readable storage medium. The computer may be, for example, a user device, e.g. the user device according to the third aspect comprising a processor, a transceiver and a memory as shown in Figure 17. The computer-readable medium may be stored in the memory of the user device. The instructions stored on the computer-readable medium may be executed by the processor of the user device.

### BRIEF DESCRIPTION OF THE DRAWINGS

Further embodiments of the invention will be described with respect to the following figures, in which:
Fig. 1 shows a schematic diagram illustrating a system setup 100 of RAT-dependent positioning in cellular mobile networks according to the disclosure;
Fig. 2 shows an exemplary message sequence diagram 200 for configuring a location reference UE by an AF according to the disclosure;
Fig. 3 shows an exemplary message sequence diagram 300 for obtaining UE x capability and location information by the LMF using LPP according to the disclosure;
Fig. 4 shows an exemplary system architecture 400 configured for location reference UE configuration in UDM according to the disclosure;
Fig. 5 shows an exemplary system architecture 500 configured for location reference UE activation according to the disclosure;
Fig. 6 shows an exemplary message sequence diagram 600 for MT-LRR triggered location reference UE activation according to the disclosure;
Fig. 7 shows an exemplary message sequence diagram 700 for MO-LRR triggered location reference UE activation according to the disclosure;
Fig. 8 shows an exemplary system architecture 800 configured for exposure of location reference UE information according to the disclosure;
Fig. 9 shows an exemplary message sequence diagram 900 for a (target) UE obtaining location reference information using location request according to the disclosure;
Fig. 10 shows an exemplary message sequence diagram 1000 for a (target) UE obtaining location reference information using LPP according to the disclosure;
Fig. 11 shows a schematic diagram illustrating location reference management for area of interest according to the disclosure;
Fig. 12 shows an exemplary signaling chart for location reference management 1200 according to the disclosure;
Fig. 13 shows an exemplary scenario for enhanced network based positioning 1300 according to the disclosure;
Fig. 14 shows an exemplary signaling chart for enhanced network-based positioning 1400 according to the disclosure;
Fig. 15 shows an exemplary scenario for enabling location service using UE-type location references in highway tunnel 1500 according to the disclosure;
Fig. 16 shows an exemplary scenario for enabling location service using UE-type location references in indoor garage 1600 according to the disclosure;
Fig. 17 shows a schematic diagram illustrating a communication system 1700 for managing user profile data according to the disclosure;
Fig. 18 shows a schematic diagram illustrating a method 1800 for managing user profile data according to the disclosure; and
Fig. 19 shows a schematic diagram illustrating a method 1900 for providing user profile data according to the disclosure.

### DETAILED DESCRIPTION OF EMBODIMENTS

In order to describe the invention in detail, the following terms, abbreviations and notations will be used:
- UE: user equipment
- RAT: radio access technology
- LTE: long term evolution
- NR: new radio
- LCS: location service
- TRP: transmit-receive point
- SL: sidelink
- ARP: antenna reference point
- RS: reference signal
- RSRP: reference signal receive power
- RSTD: reference signal time difference
- LMF: location management function
- LPP: LTE positioning protocol
- UDM: unified data management (entity)
- UDR: unified data repository (entity)
- AMF: access and mobility management function (entity)
- AF: application function
- NEF: network exposure function
- NF: network function
- GMLC: gateway mobile location centre
- LRR: location reference request
- MO-LR: mobile-originated location request
- CN: core network
- RAN: radio access network
- ID: identity

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

The methods, devices and systems described herein may be implemented in radio network, in particular LTE, 5G, or 5G beyond. The described devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

The devices described herein may be configured to transmit and/or receive radio signals. Radio signals may be or may include radio frequency signals radiated by a radio transmitting device (or radio transmitter or sender). However, devices described herein are not limited to transmit and/or receive radio signals, also other signals designed for transmission in deterministic communication networks may be transmitted and/or received.

The devices and systems described herein may include processors or processing devices, memories and transceivers, i.e. transmitters and/or receivers. The term "processor" or "processing device" describes any device that can be utilized for processing specific tasks (or blocks or steps). A processor or processing device can be a single processor or a multi-core processor or can include a set of processors or can include means for processing. A processor or processing device can process software or firmware or applications etc.

The devices and systems described herein may include transceivers or transceiver devices. A transceiver is a device that is able to both transmit and receive information or signal through a transmission medium, e.g. a radio channel. It is a combination of a transmitter and a receiver, hence the name *transceiver.* Transmission is usually accomplished via radio waves. By combining a receiver and transmitter in one consolidated device, a transceiver allows for greater flexibility than what either of these could provide individually.

In the present disclosure, the device may be referred to as user device in some embodiments, and a device may be, for example, a mobile phone, an intelligent terminal, a tablet computer (tablet), a notebook computer (laptop), a video game console, a multimedia player, vehicle, device to device (D2D) equipment, or any smart device which supports a positioning function. The user device may also be referred to as user equipment (UE) in some embodiments of the present disclosure.

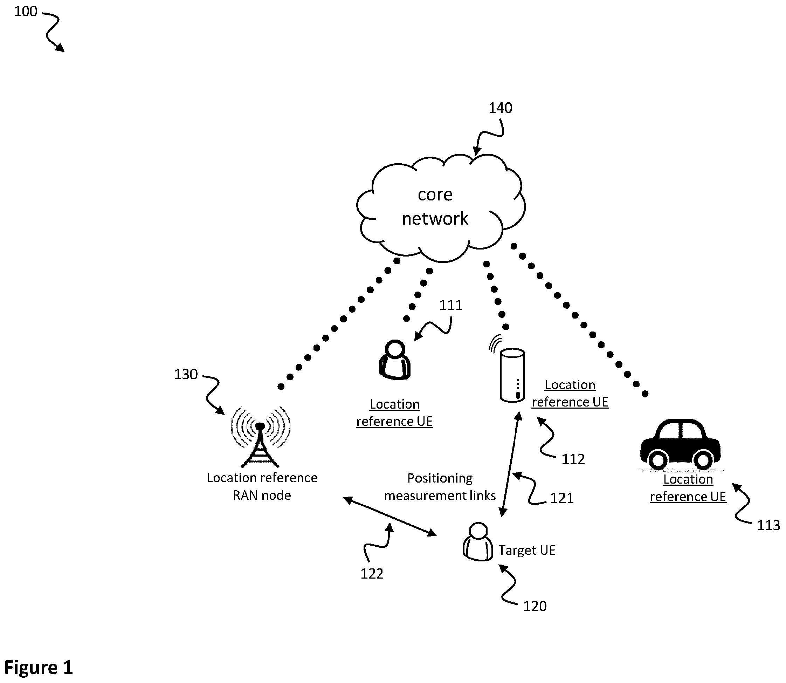

Fig. 1 shows a schematic diagram illustrating a system setup 100 of RAT-dependent positioning in cellular mobile networks according to the disclosure. Considering different types of user devices providing positioning measurement references over sidelink, Figure 1 shows the basic system setup of the location service in the next generation cellular mobile networks. In addition to the location reference RAN nodes 130, user equipment (UE)-type location references 111, 112, 113 offer a new degree of freedom to enhance RAT dependent positioning.

Sidelink transmission and reception has been developed in 3GPP NR to support in-coverage, partial coverage and out-of-coverage user equipment. In order to improve the availability and accuracy of RAT dependent positioning, positioning measurements 121 over sidelink between two user devices 120, 112 are considered. These measurements 121 can be utilized to further determine the relative position between the two devices. In case that one of the user device's position is known or to some extent known, the absolute position of the other can be determined correspondingly.

Nevertheless, the management aspects of the UE-type location references need to be provided by the network. This disclosure particularly deals with the problem of location reference management from the core network's perspective. Examples of this location reference management functionality may include the awareness of UE-type location references, maintenance of UE-type location references, and exposure of UE-type location references as described hereinafter.

Present disclosure provides method and apparatus for sidelink positioning, in particular the location reference management in a wireless network. A network entity for managing user profile data of at least one first user device in in a mobile communication network, the network entity comprising: a communication interface, configured to obtain location reference capability information of the first user device, wherein the location reference capability information indicates the first user device is capable of assisting positioning for a second user device; and a processor, configured to store the location reference capability information in the network entity.

The processor may be configured to store the location reference capability information within the user profile data of the first user device in the network entity. The user profile data of the first user device may include a state indication indicative of whether the first user device is activated or deactivated as a location reference.

The processor may be configured to update the state indication in the user profile data of the first user device based on an activation or deactivation of the user device as a location reference.

The following disclose the details of the apparatus and people skilled in the prior art will be easy to understand the implementation the solution in a method, computer program, or any other possible implementation.

In order for the UE-type location references to fill the performance gaps of the RAT dependent positioning techniques, it is necessary to include location reference management functionality in the cellular mobile network. This functionality may include the three aspects of: a) Location reference information; b) Location reference activation; and c) Exposure of location reference information.

### a) Location reference information

A UE-type location reference can be described as a user device which is capable of assisting positioning of another target device in either a global geographic coordinate system or a local coordinate system associated with a reference device. A UE-type location reference may be identified using a location reference identity which is contained in the location reference information. In addition to the location reference identity, the location reference information may also contain the state information, capability information and privacy profile of a UE-type location reference. The state information may indicate whether a location reference is activated. The capability information of a UE-type location reference may consist of the following aspects:
A first aspect are physical layer parameters for positioning measurement, for instance:
1) List of supported frequency bands for positioning signal measurement
2) Number of frequency layers used for positioning measurements
3) Types of positioning measurement supported, e.g. RSTD, RSRP, Rx-Tx time difference. This may be represented by a bit string, each bit of which indicates a particular type of measurement.
4) Number of each type of the measurements supported per location reference UE
5) Number of antenna reference point (ARP)
6) Parameters of each ARP, e.g. ARP identity, dimension of antenna elements in the ARP, relative position to a reference point in the location reference UE, orientation of the ARP in the location reference UE's local coordinate system.

These parameters may refer to obtaining positioning measurements using a sidelink reference signal transmitted by another UE, or using an uplink reference signal transmitted by another UE, or using even a downlink reference signal transmitted by a moving base station. For different frequency range, e.g. below 6GHz or above 6GHz carrier frequency, different parameter sets may be applied. Similar for the different functionalities, such as for communication and for positioning or environment sensing, different parameter sets may be applied.

A second aspect are physical layer parameters for positioning reference signal transmission, for instance: 1) List of supported frequency bands for positioning signal transmission
2) Number of frequency layers for positioning signal transmission
3) Number of antenna reference point (ARP) for positioning signal transmission
4) Parameters of each ARP, e.g. ARP identity, dimension of antenna elements in the ARP, relative position to a reference point in the location reference UE, orientation of the ARP in the location reference UE's local coordinate system.
5) Transmit power related parameter, e.g., maximum Effective Isotropic Radiated Power (EIRP) per location reference UE, per antenna panel/ARP or per beam.

For different frequency range, e.g. below 6GHz or above 6GHz carrier frequency, different parameter sets may be applied. Similarly, for different functionalities, such as for communication and for positioning, different parameter sets may be applied.

A third aspect is location information, for instance:
1) Location estimate, including location coordinates of the location reference UE, orientation as well as uncertainty information defined as one of the geographic shapes in 3GPP TS 23.032.
2) Velocity estimate, including speed, bearing information and uncertainty information. Definitions of velocity shapes in [ts23032] may be used.
3) Location source, such as GNSS, WLAN, radio etc.
4) Location time stamp when the location estimate has been obtained.
5) Location reference UE identity, indicating whether the UE is manufactured as a location reference.
6) Valid time duration for which the location information is valid.

A fourth aspect is location determination capability, indicating whether the location reference UE is capable of calculating another UE's position if necessary location information and assistance data is provided. This may include positioning methods supported.

The privacy profile of a UE-type location reference may consist of at least the following classes:
1) Serving as a location reference allowed without notifying the UE user;
2) Serving as a location reference allowed with notification to the UE user;
3) Serving as a location reference requires notification and verification by the UE user, serving as a location reference is allowed only if granted by the UE user or if there is no response to the notification;
4) Serving as a location reference requires notification and verification by the UE user, serving as a location reference is allowed only if granted by the UE user.

Each class may indicate additional information such as a valid time period or a valid geographic area for positioning or for a specific application.

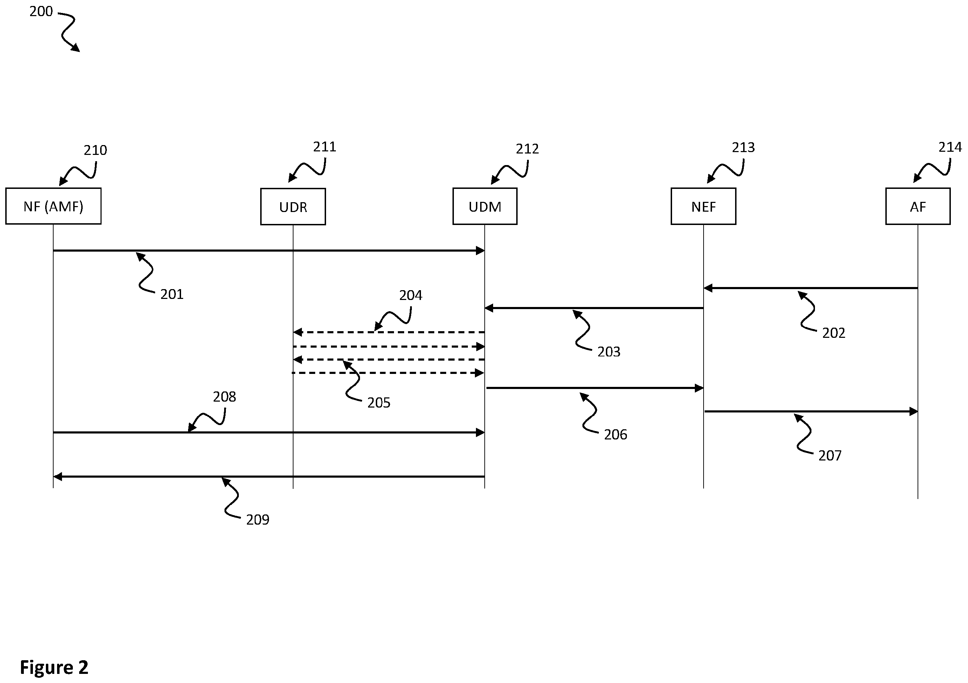

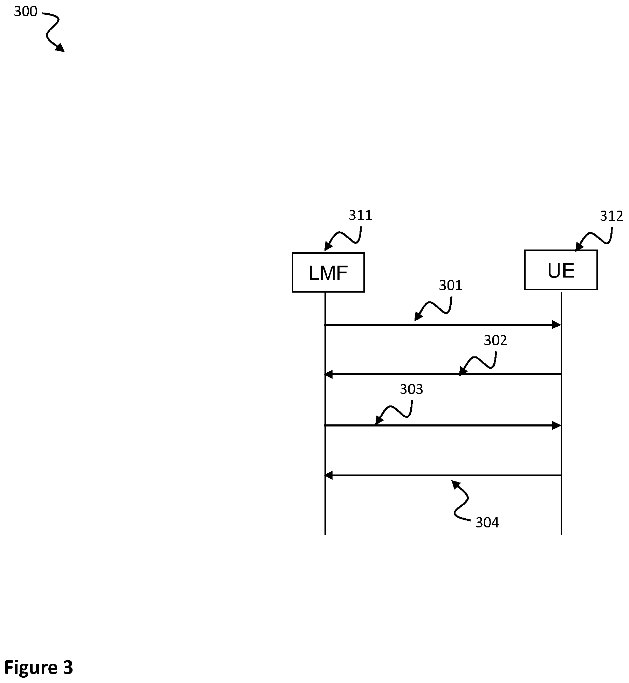

A user device may be manufactured as or configured to become a location reference. This configuration may be controlled either by the user or by the network and may be updated dynamically. Therefore, the location reference information of a UE-type location reference may be included in the UE subscription data as a new parameter set and stored in a network function of the core network, e.g. Unified Data Repository (UDR) via Unified Data Management (UDM). The radio access related parameters may be contained in the UE radio capability information. The location reference information of a user device can be obtained by the core network in the following three manners:
i) A UE-type device can be registered as a location reference. When a location reference UE registers to the network, the location reference information is included in the UE context data and obtained by the Access and Mobility Management Function (AMF). AMF further stores this information in the UDM/UDR. Since the mobility management functions are used to track the location of the UEs coarsely, when it applies to location reference UEs, the AMF is aware of the location reference UEs in a certain area.
ii) A UE-type device can be configured as a location reference in the UDM/UDR by an Application Function (AF). The AF provides the location reference information of one or multiple UEs to UDM/UDR via the Network Exposure Function (NEF) using the external parameter provision procedure as illustrated in Figure 2. This procedure is based on current signaling while location reference information should be introduced in order to provide the functionality.
iii) A UE-type device can be configured as a location reference in the UDM/UDR by the Location Management Function (LMF). The location reference information of a UE may be obtained by the LMF using LPP as shown in Figure 3. The location reference information consisting of the obtained capability information and location information may be further provided to the UDM/UDR.

Fig. 2 shows an exemplary message sequence diagram 200 for configuring a location reference UE by an AF according to the disclosure.

Different entities of the core network are shown. A network function , e.g. an AMF (access and mobility management function) entity 210, a UDR (unified data repository) entity 211, a UDM (unified data management) entity 212 a NEF (network exposure function) entity 213 and an AF (application function) entity 214.

The following messages are exchanged between these entities:
Step 0: "Nudm_SDM_subscribe request (e.g.candidate location reference UE profile (application ID, UE ID))" 201; from NF (AMF) 210 to UDR 211;
Step 1: Nnef_ParameterProvision_Create/Update/Delete Request (e.g.location reference UE ID, location reference information, application ID) 202; from AF 214 to NEF 213;
Step 2: "Nudm_ParameterProvision_Create/Update/Delete Request (e.g.location reference UE ID, location reference information)" 203, from NEF 213 to UDM 212
Step 3: "Nudr_DM_Query" 204; from UDM 212 to UDR 211;
Step 4: "Nudr_DM_Update" 205; from UDM 212 to UDR 211;
Step 5: "Nudm_ParameterProvision_Create/Update/Delete Response" 206 from UDM 212 to NEF 213;
Step 6: "Nnef_ParameterProvision_Create/Update/Delete Response" 207, from NEF 213 to AF 214;
Step 7: "Nudm_SDM_Get request (inquire candidate location reference UE (application ID, UE ID))" 208; from NF (AMF) 210 to UDM 212;
Step 8 "Nudm_SDM_Notification Notify/Response" 209; from UDM 212 to NF (AMF) 210.

Step 1 and 2 show that requested by an AF, the location reference information in UDM/UDR may be created, updated or deleted per UE. NEF checks whether the requestor is allowed to perform the requested service operation by checking the AF identity (ID). In Step 5 and 6, the UDM responds the request to the AF via NEF whether the operation is successful. As shown in step 0, another network function (NF), i.e. AMF, can subscribe to UDM for updates of UE's location reference information. Alternatively as shown in step 7, NF, e.g. AMF may inquire to UDM for a user device's location reference information. The UDM shall check whether the requested consumer is authorized to get the location reference information using the application identity and/or UE ID. In case that the operation in step 4 is successful, the UDM notifies the subscribed NF, e.g. AMF, of the updated UE subscription data as shown in step 8.

Fig. 3 shows an exemplary message sequence diagram 300 for obtaining UE capability and location information by the LMF using LPP according to the disclosure;

A UE-type device can be configured as a location reference in the UDM/UDR by the location management function (LMF) 311. The location reference information of a UE 312 may be obtained by the LMF 311 using LPP. The location reference information consisting of the obtained capability information and location information may be further provided to the UDM/UDR 211, 212 as shown in Figure 2.

The following messages are exchanged between LMF 311 and UE 312:
Step 1: LPP: RequestCapabilities 301; from LMF to UE
Step 2: LPP: ProvideCapabilities 302; from UE to LMF;
Step 3: LPP: RequestLocationlnformation 303; from LMF to UE;
Step 4: LPP: ProvideLocationlnformation 304; from UE to LMF.

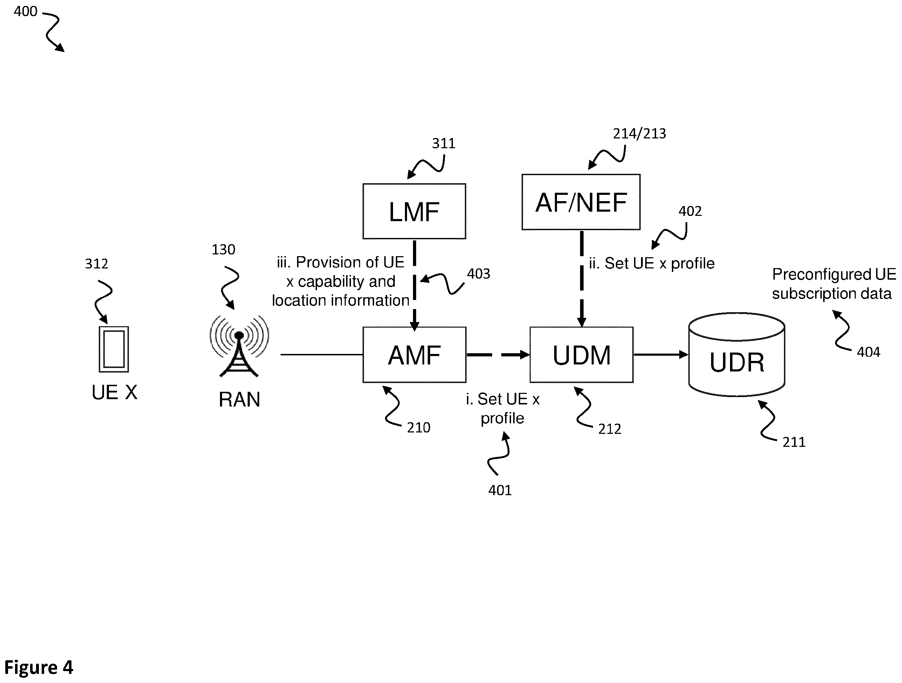

Fig. 4 shows an exemplary system architecture 400 configured for location reference UE configuration in UDM according to the disclosure. An overview of the three options to configure a location reference UE in the UDM is provided. UDR 211 may include preconfigured UE subscription data 404 *(e.g., UE profile: location reference for application Y, state=ON*/*OFF).* New messages are indicated by thick dashed lines.

A first option 401 is "i. Set UE x profile: *(e.g., UE x profile: location reference point for application Y, state=OFF)",* between AMF 210 and UDM 212.

A second option 402 is *"Set UE x profile: (e.g., UE x profile: location reference point for application Y, state=OFF)",* between AF/NEF 214/213 and UDM 212.

A third option 403 is "Provision of UE x capability and location information" 403, between LMF 311 and AMF 210.

Thus, location reference information as described above provide the following technical advantages. Having the location reference information in the UE profile and available to the core network function offers a cellular radio network a prerequisite to provide scalable location reference deployment, namely complementing the network deployment with UE-type location references. This may eliminate the LCS performance constraint given by the fixed network deployment in a cellular radio network.

### b) Location reference activation

A UE-type location reference may be activated to serve as the location reference by providing positioning measurement assistance. In order for an external client or application function to activate a UE-type location reference, new service operations may need to be introduced at AMF and gateway mobile location centre (GMLC), summarized in Table 1.

**Table 1. New functionalities for AMF and GMLC location service**

| Service name | Service operations | Operation | Consumer |
|---|---|---|---|
| Namf_Location | SetLocationReference | Request/Response | GMLC, LMF |
| | CancelLocation Reference | Request/Response | GMLC, LMF |
| Ngmlc_Location | SetLocationReference | Request/Response | GMLC, NEF |
| | CancelLocation Reference | Request/Response | GMLC, NEF |
| | LocationReferenceUpdate | Request/Response | AMF, GMLC, NEF |

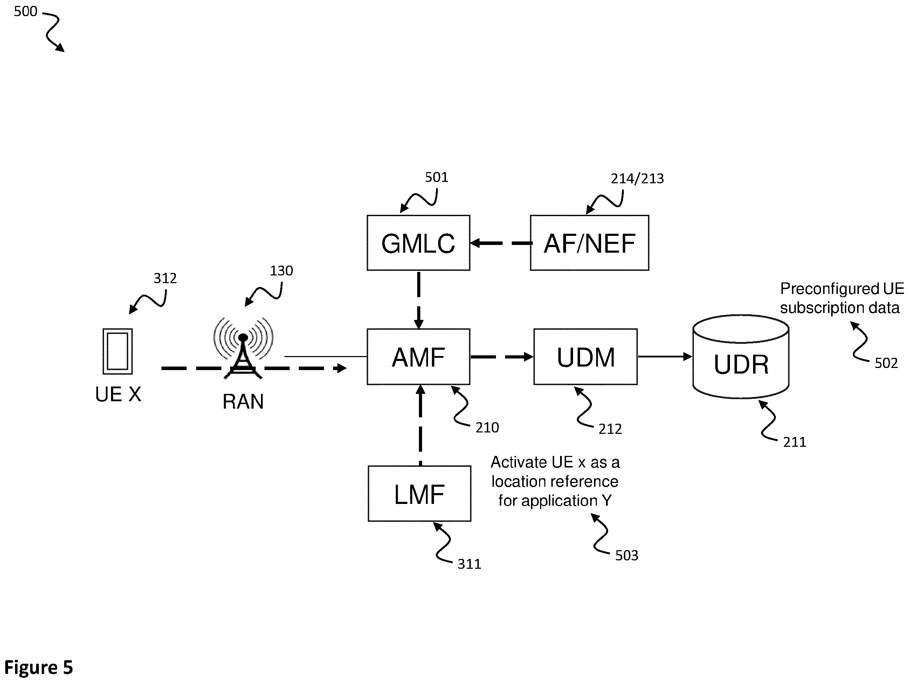

The new service operation is illustrated in Figure 5 described below.

Fig. 5 shows an exemplary system architecture 500 configured for location reference UE activation according to the disclosure.

A UE-type device 312 can be activated 503 as a location reference for application Y in UDM/UDR 212/211. The activation may be mobile originated by UE 312 via RAN 130 and AMF 210, or via AF/NEF 214/213, GMLC (gateway mobile location centre) 501 and AMF 210 or via LMF 311 and AMF.

UE x is activated 503 as a location reference for application Y (e.g., UE x profile: location reference state=ON). UDR may include preconfigured UE subscription data 502 (e.g., UE profile: location reference for application Y*,* state=ON/OFF). New messages are indicated by thick dashed lines.

The new service operations can be described as follows:
1) Namf_Location_SetLocationReference: allow a consumer NF to activate one or multiple location reference UE. The operation request may include one or multiple UE IDs, number of location reference UEs, geographical information, time information, triggering conditions etc. The consumer receives success or failure indication.
2) Namf_Location_CancelLocationReference: allow a consumer NF to deactivate one or multiple location reference UE. The operation request may include one or multiple UE IDs, number of location reference UEs, geographical area, time information, triggering conditions etc. The consumer receives success or failure indication.
3) Ngmic_Location_SetLocationReference: GMLC is the first node accessed by an external LoCation Service (LCS) client in a public land mobile network (PLMN). An AF or NF may access GMLC directly or via NEF to activate a location reference UE. The operation request may contain UE identifier, application ID, geographical information, time information, triggering conditions etc. The GMLC may request the location reference UE's privacy information from the UDM and perform the authorization of the external LCS client of the AF. For the roaming cases, the location reference UE's privacy information shall be checked by the GMLC in the UE's home GMLC. The consumer receives success or failure indication.
4) Ngmlc_Location_CancelLocationReference: Similarly, an external LCS client, an AF or NF may deactivate a location reference UE. The consumer receives success or failure indication.
5) Ngmic_Location_LocationReferenceUpdate: allow a consumer AF or NF to subscribe location reference information updates.

As an AMF operation, the UE-type location reference activation can be triggered by a novel type of location service request, namely Location Reference Request (LRR). Three types of LRRs may be supported:
I) Mobile Terminated (MT)-LRR: requested by an NF/AF or an external client to activate a location reference UE.
II) Mobile Originated (MO)-LRR: requested by a location reference UE to become a location reference.
III) Network induced (NI)-LRR: requested by a serving AMF to set a location reference UE. This may apply to certain regulatory services.

LRRs can be either immediate or deferred, namely:
- Immediate LRR: an LCS client or AF/NF sends a LRR to activate one or multiple location reference UEs and expects that the location reference UE is/are activated when a success response is received; or
- Deferred LRR: an LCS client or AF/NF sends a LRR to activate one or multiple location reference UE and expects to receive a response containing the indication of event occurrence and location reference information at some future time. In this case, the activation of a location reference UE is associated with specific events occurred to the specific location reference UE. The types of events may include UE availability, UE entering or leaving a pre-defined geographical area, periodic activation of a UE-type location reference, UE's motion change such as change of velocity or orientation, etc.

An LRR may include one or more of the following attributes: location reference UE ID(s), application ID or external client identity, time information such as when or how long/often a location reference UE should be activated, geographical information which relates to the activation of a location reference UE and any other types of events which are used as the triggering condition.

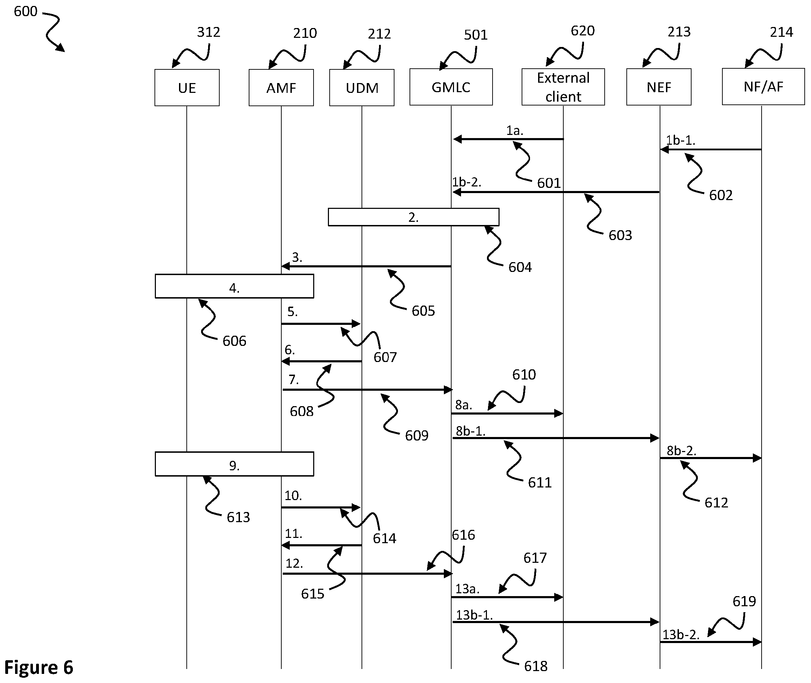

Correspondingly, the location reference response may contain one or more of the following attributes: success or failure indication or indication of an event that triggers the activation of the location reference UE. An exemplary MT-LRR procedure is depicted in Figure 6.

Fig. 6 shows an exemplary message sequence diagram 600 for MTT-LRR triggered location reference UE activation according to the disclosure.

The for MTT-LRR triggered location reference UE activation can be described by the following steps:
Step 1: The external location service client (1a) or the AF via NEF (1b-1, 1b-2) sends a request to the (home) GMLC for activating a UE-type location reference: (1a): "LCS Service Request (MT-LRR)" 601; (1b-1): "Nnef_EventExposure_Subscribe (MT-LRR)" 602; (1b-2): "Ngmlc_Location_SetLocRef Request" 603.
Step 2: The (home) GMLC checks the privacy setting and capability information of the UE using the subscription data management service of UDM. From UDM, the GMLC may also obtain the network address of the current serving AMF and the address of a visited GMLC in case the UE is roaming: (2) "Privacy & UE capability check with UDM" 604.
Step 3: The GMLC invokes the Namf_Location_SetLocationReference service operation towards the serving AMF to activate one or multiple UE-type devices as location reference: (3) "Namf_Location_SetLocRef Request" 605.
Step 4: If the privacy setting indicates that the user of the UE must be notified or notified with privacy verification before being activated as a location reference, this may be carried out by AMF: (4) "Privacy Check" 606.
Step 5: In case of an immediate LRR, AMF may invoke the context management update operation request to UDM and updates the location reference state information of the corresponding UE. In case of a deferred LRR, this step may be omitted: (5) "Nudm_UECM_update Request
   (UE ID: Location reference state ON)" 607.
Step 6: In case of an immediate LRR, AMF may receive service response from UDM and configure the corresponding UEs to serve as location reference: (6) "Nudm_UECM_update Response" 608. In case of a deferred LRR, this step may be omitted.
Step 7: In case of an immediate LRR, AMF may return Namf_Location_SetLocationReference response towards the visited GMLC if the UE is roaming, otherwise towards home GMLC. If the AMF supports a deferred LRR, the AMF may return an acknowledgement indicating that the LRR has been accepted: (7) "Namf_Location_SetLocRef Response" 609.
Step 8: The (home) GMLC may send service response to the external LCS client (8a) or via NEF to the AF (8b-1, 8b-2): (8a) "LCS Service Response" 610; (8b-1) "Ngmlc_Location_SetLocRef Response" 611; (8b-2) "Nnef_EventExposure_Notify" 612.
Step 9-13: Step 5 and step 6 may be omitted in case of deferred LRR. For a deferred LRR, the UE or the AMF may monitor for occurrence of the corresponding trigger event requested in LRR. Upon an event detection, Step 10 to step 13 may carry out optionally one or more of:
   (9) "Event detected" 613;
   (10) "Nudm_UECM_update Request (UE ID: Location reference state ON)" 614;
   (11) "Nudm_UECM_update Response" 615;
   (12) "Namf_Location_SetLocRef Response" 616;
   (13a) "LCS Service Response" 617
   (13b-1) "Ngmlc_Location_SetLocRef Response" 618
   (13-b2) "Nnef_EventExposure_Notify" 619.

Correspondingly, this procedure can be utilized by the authorized NF/AF or external LCS clients to deactivate one or multiple UE-type location references.

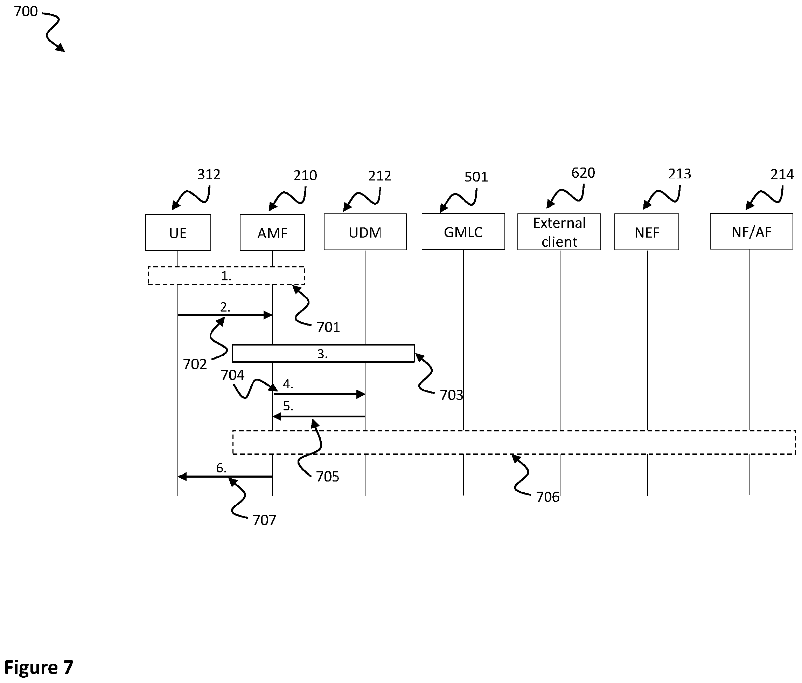

Similarly, an exemplary MO-LRR procedure is provided in Figure 7.

Fig. 7 shows an exemplary message sequence diagram 700 for MO-LRR triggered location reference UE activation according to the disclosure.

The LRR may be initiated by a UE 312, namely application client in the user device. Given the necessary privacy control and capability verification offered by the network, the location reference state of the UE 312 can be activated. The detailed signaling procedure can be described as the following:
Step 1. "UE triggered service request" 701: If the UE 312 is in idle state, it may instigate the UE triggered service request for establishing connection or bearer(s) with network through e.g. AMF 210.
Step 2. "UL NAS TRANSPORT MO-LRR Request" 702: The UE 312 may send an MO-LRR Request message included in a UL NAS TRANSPORT message and requests to become a location reference. This may be triggered by application on the UE side.
Step 3. "Privacy & UE capability check with UDM" 703: The AMF 210 may invoke service operations to the UDM 212 in order to verify the UE's privacy profile and capability, e.g. whether a location transfer is allowed.
Step 4. "Nudm_UECM_update Request (UE ID: Location reference state ON)" 704: The AMF 210 invokes UE context management service operation and sets the UE 312 as a location reference.
Step 5. "Nudm_UECM_update Response" 705: The AMF 210 may receive a service response from the UDM 212 indicating whether the operation is successful. The updated location reference information may be notified 706 to the relevant NFs/AFs/external LCS client 214, 620 in case the information is subscribed: "Updated Location Reference Information notification to external client/NF/AF".
Step 6. "DL NAS TRANSPORT MO-LRR Response" 707: The UE 312 may receive an MO-LRR response message included in a DL NAS TRANSPORT message.

Correspondingly, this procedure can be utilized by a UE to activate or deactivate itself as a UE-type location reference.

The newly introduced service operations may allow a user device to serve as a location reference after necessary privacy control and capability verification. Hence, external application or clients may dynamically set "good" UEs, such as police cars, platoon head, to be location references and adapt the LCS performance to their individual requirements. This may lead to a more accurate positioning on demand as well as flexible deployment and reduced cost. In addition, deferred LRR allows UE-type location references to be activated using event triggers, leading to more scalable LCS performance.

### c) Exposure of location reference information

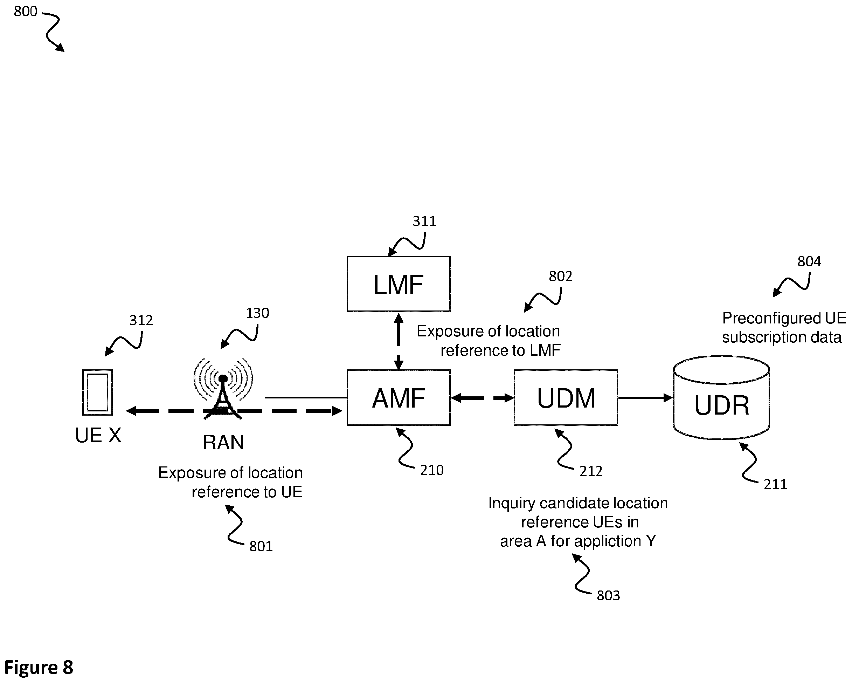

Location reference information of a user device may be exposed to authorized NF, e.g. LCS clients. A new service operation of AMF location service is introduced for provision of location reference information to the authorized NF such as GMLC and Location Management Function (LMF), as shown in Figure 8.

Fig. 8 shows an exemplary system architecture 800 configured for exposure of location reference UE information according to the disclosure. Location reference can be exposed 801 to UE 312 via link between UE 312, RAN 130 and AMF 210. Location reference can be exposed 802 to LMF 311 via link between AMF 210 and LMF 311. UDR 211 may store
preconfigured UE subscription data 804 *(e.g., UE profile: location reference for application Y, state=ON*/*OFF).* UDM 212 may inquire 803 candidate location reference UEs, for example in area A for application Y. New messages are indicated by thick dashed lines.

Table 2 shows new functionalities for the AMF location service.

**Table 2. New functionalities for AMF location service**

| Service name | Service operations | Operation | Consumer |
|---|---|---|---|
| Namf_Location | ProvideLocation Reference Info | Request/Response | GMLC, LMF |

The new service operation Table 2 is introduced and is described as follows:
Namf_Location_ProvideLocationReferencelnfo: allow a consumer NF to request location reference information of one of multiple location reference UE. The operation request may include one or more of: number of location reference UEs, geographical information, time information, location information update triggering conditions etc. The consumer receives the location reference information correspondingly.

For a LCS client, location reference information can be provided in two ways.

In a first alternative (Alt. 1), a LCS client may request location reference information using the currently existing location request with several amendments. New attributes included in the location request may contain one or more of:
i) types of location request, e.g., estimated location or location reference information;
ii) number of location reference nodes, can be either UE-type location references or available network nodes or both;
iii) Geographical information such as area of interest, service zone ID etc.;
iv) desired types of location reference information, such as capability information, location information etc.

New attributes included in the location response may contain one or more of:
i) Location reference ID(s);
ii) Location reference information;
iii) Indication of location reference update.

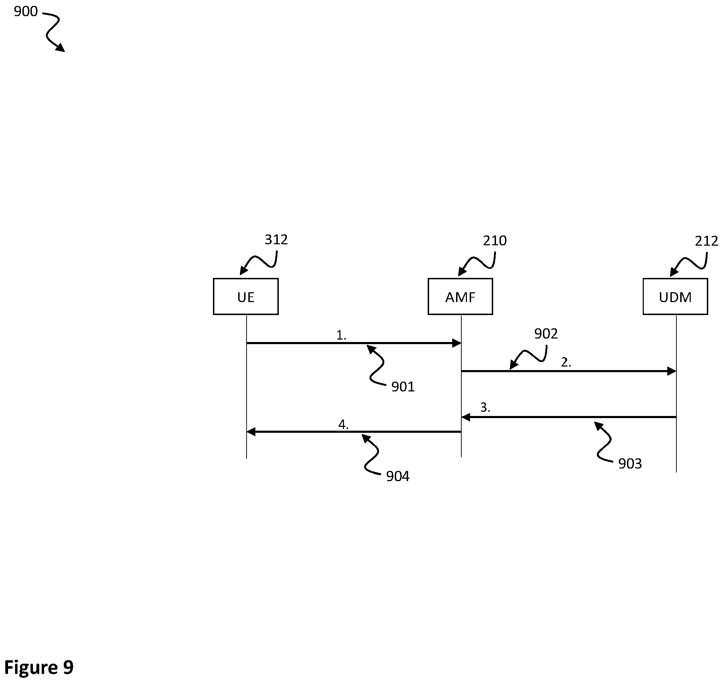

Fig. 9 shows an exemplary message sequence diagram 900 for a (target) UE obtaining location reference information using location request according to the disclosure.

The message sequence diagram 900 represents a signaling chart for obtaining location reference information by a UE using location request with the abovementioned new attributes. The signaling procedures can be described as follows:
Step 1. "UL NAS TRANSPORT (MO-LR Request, type: LocReflnfo)" 901 from UE 312 to AMF 210: A target UE 312 may send a Mobile-Originated Location Request (MO-LR) request message included in a UL NAS TRANSPORT message. The MO-LR request's type may indicate the request is for location reference information.
Step 2. "Nudm_SDM_Get Request (UE ID: Location reference profile & state)" 902 from AMF 210 to UDM 212: The AMF 210 may have maintained a list of location reference UEs for the given region of interest of the requesting UE and be able to provide the location reference information to the requesting UE; otherwise, the AMF may invoke the subscription data management service operation towards the UDM 212 and request the location reference information and/or the privacy profile of one or multiple location reference UEs.
Step 3. "Nudm_SDM_Get Response" 903 from UDM 212 to AMF 210: The UDM 212 may return the location reference information of the one or multiple location reference UEs to the AMF 210.
Step 4. "DL NAS TRANSPORT (MO-LR Response, (LocRef UE ID))" from AMF 210 to UE 312: The AMF 210 may obtain one or multiple location reference nodes based on their location reference information and/or the privacy profile and provide to the requesting UE 312 in the MO-LR response.

The location request requesting location reference information can be either immediate or deferred. For the former, the requested location reference information is provided to the LCS client within a short time period; for the latter, the provision of requested location reference information may be triggered by certain types of events, e.g. timer expiry, motion change, UE availability, or location of the LCS client. Based on the obtained location reference information, the target UE may establish direct connection to the location reference UEs for positioning measurements.

In a second alternative (Alt. 2), an LCS client may request positioning assistance data which contains location reference information to the location server function in the CN, e.g. LMF. The positioning assistance data request may be embedded in a LPP message. The LPP message specifies the types of location reference information which is requested, geographical information such as area of interest, etc.

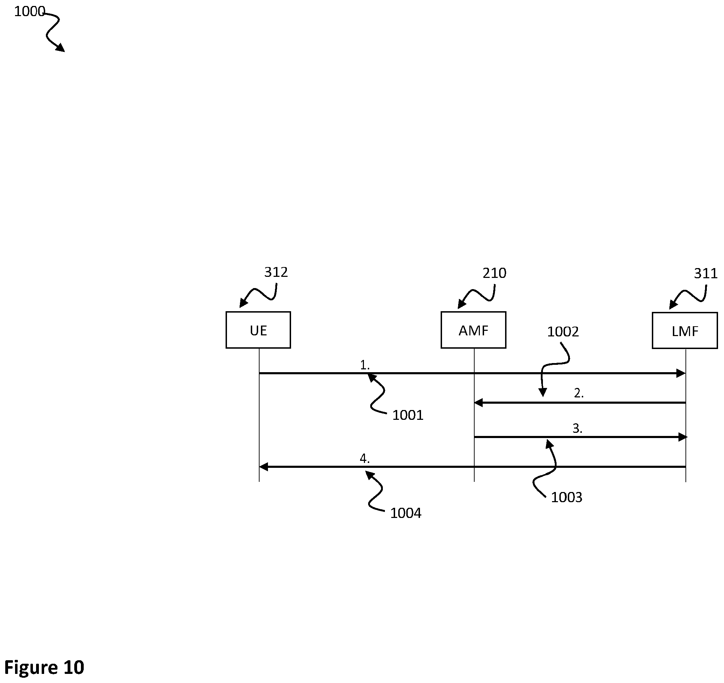

Fig. 10 shows an exemplary message sequence diagram 1000 for a (target) UE obtaining location reference information using LPP according to the disclosure.

The location reference information may be provided to LMF using the AMF location service operation in Table 2. The signaling procedure can be described as follows:
Step 1. "LPP: RequestAssistanceData" 1001 from UE 312 to LMF 311: A target UE 312 may send a LPP message to the LMF 311 requesting positioning assistance data. The positioning assistance data may comprise location reference information.
Step 2. "Namf_Location_ProvideLocation Referencelnfo Request" 1002 from LMF 311 to AMF 210: If the requested location reference information is not available at the LMF 311, the LMF may invoke the location service operation towards the AMF 210 and request the location reference information of the relevant location reference UEs.
Step 3. "Namf_Location_ProvideLocation Referencelnfo Response" 1003 from AMF 210 to LMF 311: The AMF 210 may return the location reference information of the one or multiple location reference UEs to the LMF 311.
Step 4. "LPP: ProvideAssistanceData" 1004 from LMF 311 to UE 312: The LMF 311 may provide the location reference information as positioning assistance data to the target UE 312 using LPP message. Utilizing the obtained location reference information, a target UE may establish direct connection to the UE-type location references for positioning measurements.

This procedure can be used as a complement to the existing RAT-dependent positioning methods taking the UE-type location references into account. Based on the positioning assistant data obtained, the target UE may establish direct measurement links to the UE-type location references in its vicinity.

The following advantages can be realized: Providing location reference information to authorized NFs/AFs or external clients allows any location server function, e.g. LMF to obtain additional UE-type location reference information and flexibly adapt the service quality according the requirements. It also allows external LCS clients to exploit the location reference information obtained from radio networks. Especially for UE-based positioning where a target UE calculates its own location, exposure of location reference information of potential UE-type location references offers the network assistance to a larger extent compared to the prior art scheme.

Throughout this disclosure, a user device, a UE or a UE-type device may refer to any device which comprises of a radio access module. It can be a handheld device, a laptop computer, a vehicle, a router-type device which accesses cellular mobile network, or any other device.

As shown above, the concept of the disclosure is to include location reference management functionality in one or multiple network functions in a cellular mobile network, e.g. AMF. The functionality consists of three aspects described above: a) Maintain UE-type location reference information as a part of the UE profile; b) Activate and deactivate a UE-type location reference by an external/internal entity; and c) Provide location reference information to an external/internal entity.

With the location reference management functionality introduced, RAT-dependent positioning technique can be significantly enhanced. In the following sections, three implementation examples are provided.

### a) First implementation example: Location reference management

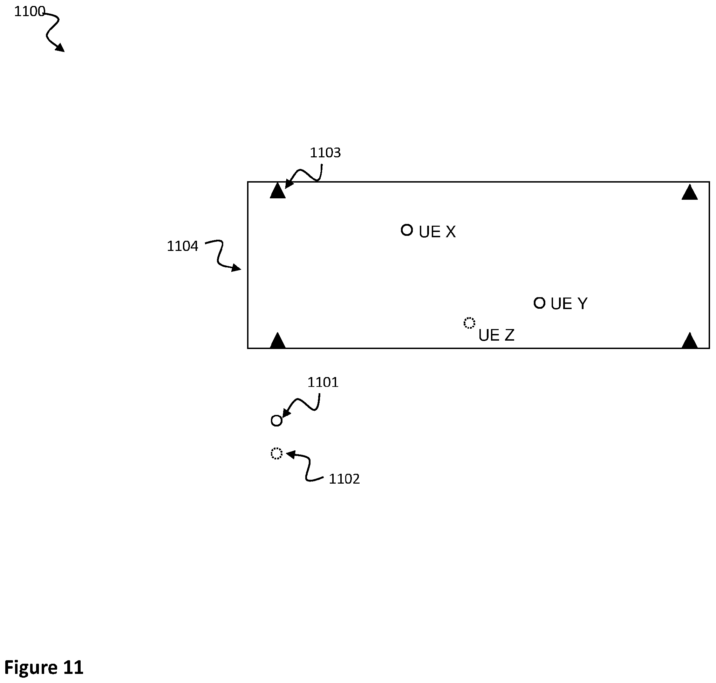

Fig. 11 shows a schematic diagram illustrating location reference management 1100 for an area of interest 1104 according to the disclosure.

For a specific area of interest 1104 with more stringent positioning accuracy requirement, a location server, e.g. LMF, may trigger the AMF to provide or update a location reference UE list on a timely basis. These UE-type location references may complement to the network nodes which are used as positioning references.

An exemplary scenario is shown in Figure 11 where four RAN nodes 1103 have been deployed within the area of interest 1104 in order to provide service coverage for data communication. However, such a fixed deployment may fail to meet the performance requirement of LCS. Thus, two location reference UEs may be requested additionally. Activated location reference UEs (UE X and UE Y) are depicted by thick circles 1101 while disabled location reference UEs (UE Z) are depicted by thin dotted line circles 1102.

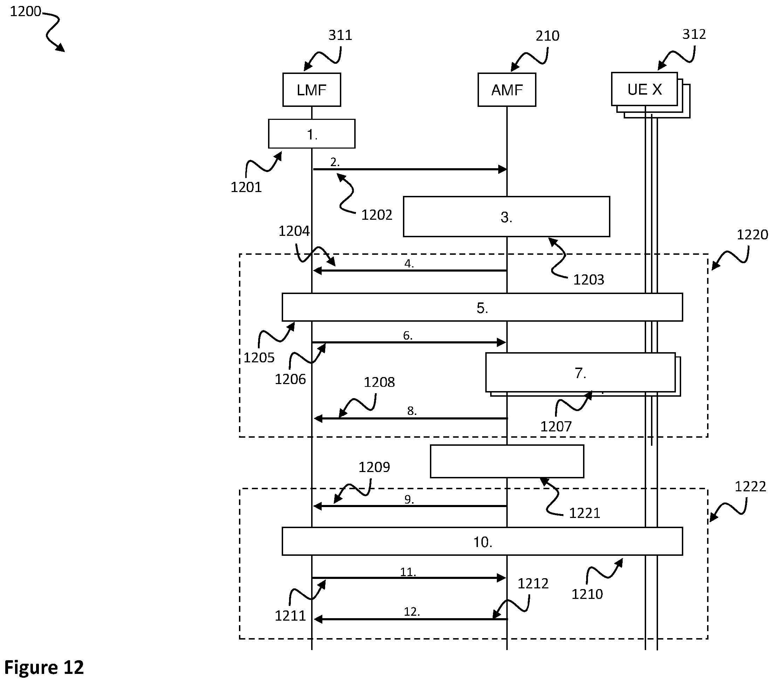

Fig. 12 shows an exemplary signaling chart for location reference management 1200 according to the disclosure.

In particular, Figure 12 provides a signaling chart for a location server, i.e. LMF 311, to obtain location reference information of the UE-type location reference from the AMF 210. A number of UE 312 are used. The signaling procedure can be described as follows:
Step 1. "trigger" 1201 at LMF 311: The LMF 311 may be triggered to obtain additional UE-type location references. This trigger may refer to a location request from a target UE, or a service request from an AF which may require specific LCS Quality of Service (QoS).
Step 2. "Namf_Location_ProvideLocRefRequest (Geo Info, number of LocRef)" 1202 from LMF 311 to AMF 210: The LMF 311 may invoke the location service operation Namf_Location_ProvideLocationReferencelnfo to the AMF 210 and request location reference information of additional UE-type location reference. Parameters included in the request may include for example geographical information, the number of UE-type location reference desired.
Step 3. "Privacy & capability check of UE XYZ with UDM" 1203 at AMF 210: The AMF 210 may select the candidate location reference UEs (e.g. UE XYZ) and verify their privacy profile and capability with the UDM.
Step 4. "Nlmf_Location_Determine Location Request (XYZ)" 1204 from AMF 210 to LMF 311: If the UE's location is not perfectly known, the AMF may invoke the location service Nlmf_Location_DetermineLocation towards the LMF and obtain the up-to-date location information of the candidate location reference UEs.
Step 5. "UE XYZ positioning" 1205: The LMF 311 may determine the location information of the candidate location reference UEs.
Step 6. "Nlmf_Location_Determine Location Response (XYZ)" 1206 from LMF 311 to AMF 210: The LMF 311 may return location service operation response Nlmf_Location_ DetermineLocation to the AMF 210.
Step 7. "Privacy notification to UE X if required" 1207: The AMF 210 may select the location reference UEs based on at least their location information and notify the selected UE if this is required by the UE's privacy profile.
Step 8. "Namf_Location_ProvideLocRefResponse (LocRef UE XY)" 1208 from AMF 210 to LMF 311: The AMF 210 may provide the location reference information of the selected location reference UEs (e.g. UE XY) to the LMF 311.
Step 9. "Nlmf_Location_Determine Location Request (Z)" 1209 from AMF 210 to LMF 311: In case an event upon the selected location reference UEs occurs 1221, e.g. Y left from the area of the interest, the AMF 210 may update the location reference information. For instance, request location determination of another candidate location reference UE, e.g. UE Z. Other types of the triggering event may include timer expiry, change of the motion of the location reference UEs etc.
Step 10. "UE Z positioning" 1210: The LMF 311 may determine the location information of the candidate location reference UE.
Step 11. " Nlmf_Location_Determine Location Response" 1211 from LMF 311 to AMF 210: The LMF 311 may return location service operation response Namf_Location_ProvideLocationReferencelnfo to the AMF 210.
Step 12. "Namf_Location_ProvideLocRef Response (LocRef UE Z)" from AMF 210 to LMF 311: The AMF 210 may provide the location reference information of the selected location reference UEs (e.g. UE Z) to the LMF 311.
Steps 4 to 8 may belong together as indicated by frame 1220. Steps 9 to 12 may belong together as indicated by frame 1222 "event triggered location information update". I.e. steps 9 to 12 describe the location information update after a trigger event (e.g. Y left) 1221.

This embodiment provides an exemplary implementation where the AMF maintains a list of active UE-type location references for a given region of interest. After the list of UE-type location references for a given region is obtained, it can be provided to the LMF or any external location determination application. This leads to scalable LCS performance and optimized power consumption.

### b) Second implementation example: Network-based positioning enhancement

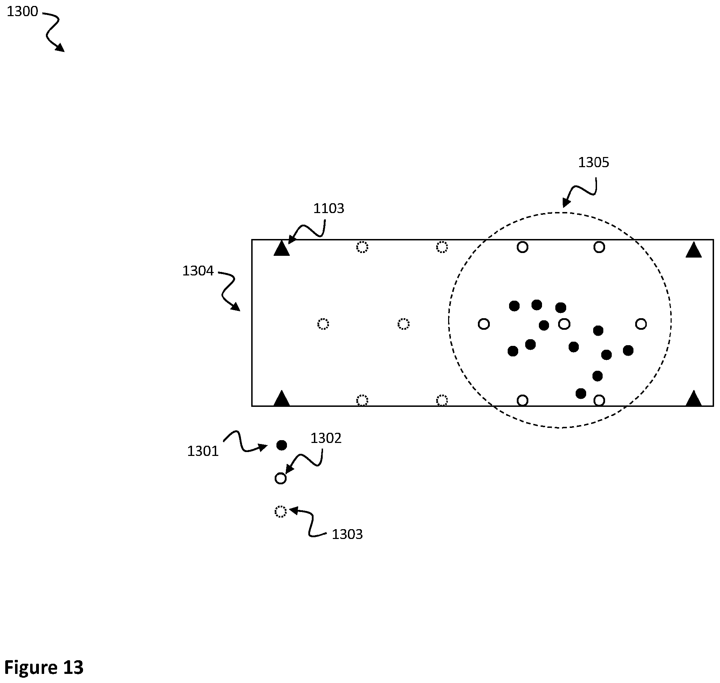

Figure 13 shows an entire factory floor 1304 provided with location service with certain accuracy requirement. In the factory floor 1304 four RAN nodes 1103, a plurality of moving target UEs 1301, a plurality of enabled location reference UEs 1302 and a plurality of disabled location reference UEs 1303 may be located. A circle 1305 depicts the region of interest within which the location reference UEs are to be activated.

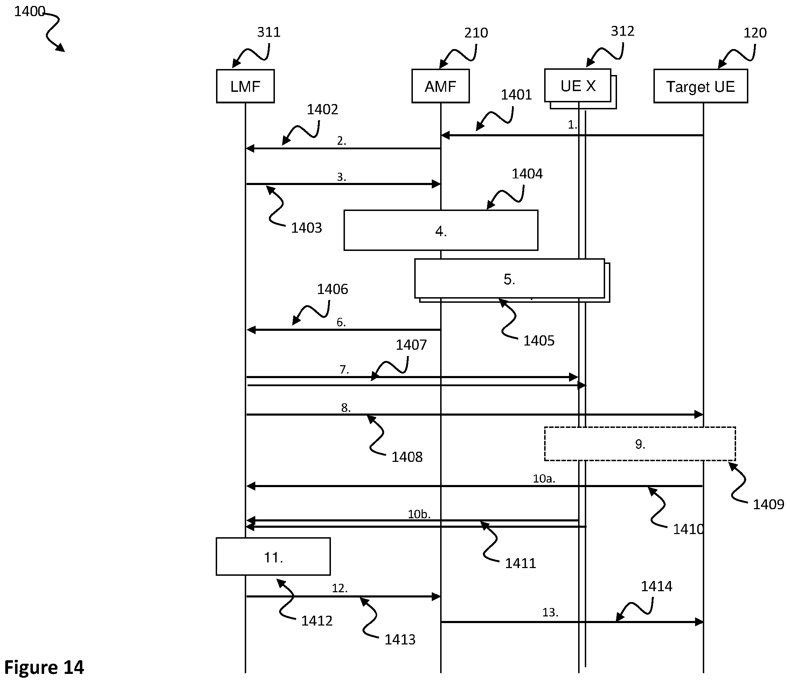

Four RAN nodes 1103 have been deployed for the purpose of mobile radio communication. Given only the positioning measurements obtained using the deployed RAN nodes 1103, the LCS quality of service in the given region cannot be met. In order to provide enhanced LCS with variable accuracy requirements, UE-type anchor tags with location known are installed. The location server may dynamically determine how many and which anchor tags to enable as location reference UEs according to the positioning accuracy requirement and the a-priori position or velocity estimation of one or multiple target UEs. This can be enabled by the new AMF service operation described above with respect to Figures 1 to 10. An exemplary signaling chart is provided in Figure 14 and described in the following.

Fig. 14 shows an exemplary signaling chart for enhanced network-based positioning 1400 according to the disclosure.

In particular, Figure 14 provides a signaling chart for enhanced network-based positioning 1400 between LMF 311, AMF 210, a number of UEs X 312 and target UE 120. The signaling procedure can be described as follows:
Step 1. "UL NAS TRANSPORT (MO-LR Request)" 1401 from target UE 120 to AMF 210: A target UE 120 may send a MO-LR request included in a UL NAS TRANSPORT message and request for location estimation of the UE. The MO-LR request may be triggered by a previously received LCS response indicating that the requested LCS QoS was not met. The MO-LR request may include an indicator which indicates an enhanced LCS QoS, e.g. accuracy, is needed.
Step 2. "Nlmf_Location_Determination Request" 1402 from AMF 210 to LMF 311: The AMF 210 may invoke Nlmf_Location_determineLocation service operation towards the LMF 311.
Step 3. "Namf_Location_SetLocRef Request (number of LocRef, geo info)" 1403 from LMF 311 to AMF 210: The LMF 311 may determine that the LCS QoS cannot be fulfilled and initiate a location reference UE activation procedure. The decision can be made based on the requested LCS QoS, the existing network deployed location reference nodes, the positioning measurement obtained at the LMF, or an indicator of enhanced LCS QoS received in the location request etc. The LMF then may invoke Namf_Location_SetLocationReference service operation towards the AMF and requests to activate the UE-type anchor tags as additional location reference UEs within a region of interest. The LMF may derive a common region of interest based on multiple location requests for location estimates of multiple UEs.
Step 4. "Privacy & capability check with UDM" 1404 at AMF 210: In case that the identity of the candidate location reference UEs is not provided by the LMF 311, the AMF 210 may obtain the location reference UE identity according to the given, e.g. geographical, information. The AMF 210 may verify the privacy profile and capability of the candidate location reference UEs with the UDM.
Step 5. "Privacy notification to UE X if required" 1405 between AMF 210 and UE X 312: The AMF 210 may notify the selected location reference UE if this is required by the UE's privacy profile.
Step 6. "Namf_Location_SetLocRef Response (LocRef UE ID, etc.)" 1406 from AMF 210 to LMF 311: The AMF may return Namf_Location_SetLocationReference response to the LMF, and the Namf_Location_SetLocationReference response may containthe activated UE-type location reference's identity.
Step 7. "LPP: ProvideAssistanceData (*SL-LocRef-Common*)" 1407 from LMF 311 to UE X 312: The LMF may configure the activated location reference UEs to provide positioning measurement assistance over sidelink. The necessary parameter configuration may be conveyed to the UEs as positioning assistance data using LTE Positioning Protocol (LPP).
Step 8. "LPP: ProvideAssistanceData (*SL-LocRef-Common*)" 1408 from LMF 311 to target UE 120: The LMF may configure the target UEs to obtain positioning measurement assistance over sidelink. The necessary parameter configuration may be conveyed to the UEs as positioning assistance data using LTE Positioning Protocol (LPP).
Step 9. "sidelink positioning measurement procedure" 1409 between UE X 312 and target UE 120: Sidelink positioning measurements may be obtained using signals transmitted over sidelink. These are signals exchanged directly via UE X 312 and the target UE 120 without transmission via the other network elements depicted in Figure 14, i.e. AMF 210 and LMF 311.
Step 10. Sidelink positioning measurements may be sent to the LMF 311 using LPP. This can be carried out either by the target UE (10a. "LPP: ProvideLocationlnformation (sidelink positioning measurement)" 1410) or the location reference UEs (10b. "LPP: ProvideLocationlnformation (sidelink positioning measurement)" 1411) given that the measurement can be obtained at either entity.
Step 11. "Location determination" 1412 at LMF 311: The LMF 311 may determine the target UE's location based on at least the positioning measurement obtained over sidelink.
Step 12. "Nlmf_Location_Determination Response" 1413 from LMF 311 to AMF 210: The LMF 311 may return the Nlmf_Location_DetermineLocation Response towards the AMF 210, and the Nlmf_Location_DetermineLocation Response may include the location estimate. The LMF 311 may determine whether to deactivate the location reference UEs based on the overall LCS load and requirement.
Step 13. "DL NAS TRANSPORT (MO-LR Response)" 1414 from AMF 210 to target UE 120: The AMF 210 may send an MO-LR response message included in a DL NAS TRANSPORT message.

This implementation example allows the LMF or an external location determination function to dynamically adjust the UE-type location reference according to the service requirements, potentially leading to scalable positioning performance and optimized energy consumption.

### c) Third implementation example: Location service in partial/out-of-coverage scenario

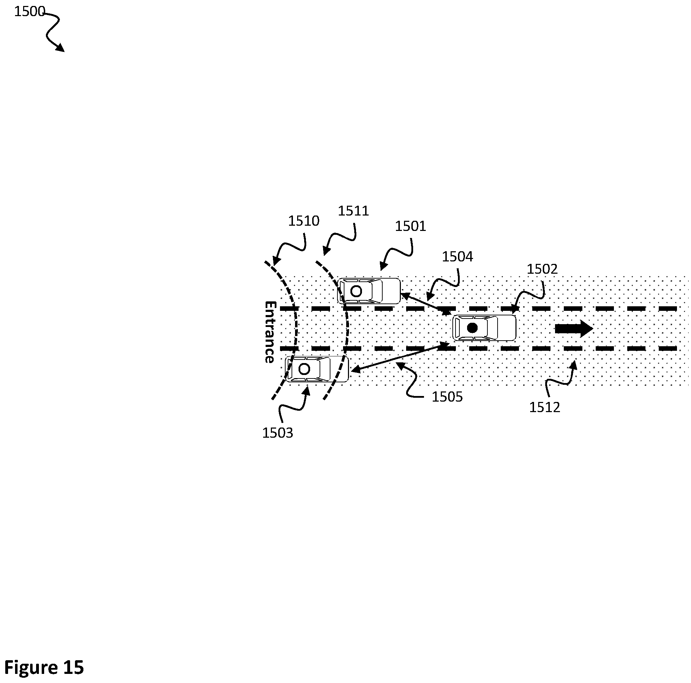

Fig. 15 shows an exemplary scenario for enabling location service using UE-type location references in highway tunnel 1500 according to the disclosure.

In this example, the UEs may be implemented for example by cars. A target UE 1502 may have fully entered the tunnel on the dark side 1512 while two location reference UEs 1501, 1503 have not fully moved into the tunnel. Location reference UE 1501 is beyond radio coverage 1511 while location reference UE 1503 is within radio coverage 1511 but beyond GNSS coverage 1510. Position measurement links 1504, 1505 may be established between target UE 1502 and location reference UEs 1501, 1503.

RAT-dependent positioning techniques is especially of interest in GNSS-denied scenarios, e.g. long tunnel, indoor distribution center or garages. In these environment, the performance of RAT-dependent positioning is fully dependent on the radio coverage. This embodiment provides examples where pre-configured UE-type location reference can be used to extend the network coverage and enhance radio-based LCS.

Figure 15 shows the entrance of a tunnel where a GNSS coverage 1510 may be typically lost and radio coverage 1511 exhibits its limit. The state of art vehicle localization mainly relies on the RAT-independent technology where motion sensors may be utilized to track the movement given the previous location estimate. Given the UE-type location reference management functionality described above with respect to Figures 1 to 10, a geolocation application may request a car to serve as location reference for a certain period of time when it enters the tunnel. This can be implemented using a deferred LRR, where the capability as well as privacy profile of a UE-type location reference is verified in advance; the activation of the location reference may be triggered by a pre-configured event, i.e. loss of GPS signal. Correspondingly, the target UEs may be pre-configured to search for location reference UEs once out of GNSS 1510 and/or radio coverage 1511.

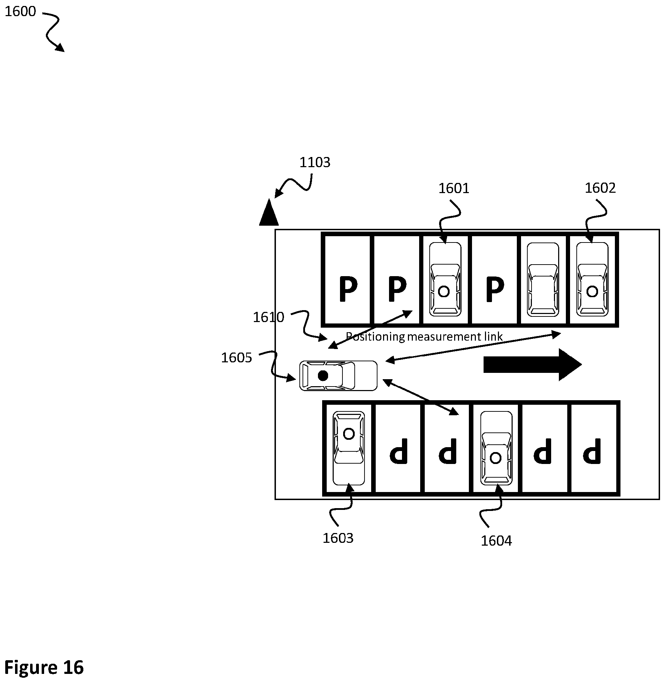

Fig. 16 shows an exemplary scenario for enabling location service using UE-type location references in an indoor garage 1600 according to the disclosure.

The scenario represents another example of using UE-type location references to extend the radio based LCS coverage. In a parking house 1600 where neither GNSS reception nor sufficient network deployment for positioning is available, a management application may request the entering cars 1605 to become location references once they are parked. This may be realized using a deferred LRR triggered by motion events. The parked cars 1601, 1602, 1603, 1604 may serve as location references and assist positioning 1610 of the moving objects 1605 in the area of interest.

These two examples (Figures 15 and 16) show that the LCS area can be easily extended using UE-type location reference. This benefits not only vertical domain applications but also public safety use cases.

Fig. 17 shows a schematic diagram illustrating a communication system 1700 for managing user profile data according to the disclosure.

The communication system 1700 may include one or more first user devices 1701a, 1701b or UEs, respectively, according to an example, a base station 1710, a second network entity 1720, e.g. an AMF 1720 and a network entity 1730, e.g. a UDM 1730.

In the example shown in Figure 17, the first user device 1701a and the other first user device 1701b are, by way of example, portable devices, in particular smartphones 1701a,b. However one or more of these user devices 1701a, 1701b may also be, by way of example, laptop computer 1701a, 1701b, mobile vehicle or machine-type device. The first user devices 1701a, 1701b may be configured to communicate with the base station 1710, for instance, via Uu channel 1704. The Uu channel 1704 or also referred to as E-UTRAN Uu interface, also known as LTE Uu or simply LTE radio interface, allows data transfer between the ENodeB (or base station 1710) and the UEs. The first user devices 1701a, 1701b may be configured to communicate with each other by sidelink channel 1702 without the base station 1710. The base station 1710 may be configured to communicate with the second network entity 1720, e.g. AMF 1720 via communication link 1714. The second network entity 1720, e.g. AMF 1720 may be configured to communicate with the network entity 1730, e.g. UDM 1730 via communication link 1724.

As can be seen from Figure 17, the first user devices 1701a, 1701b may comprise a processing circuitry 1703a, 1703b for instance, a processor 1703a, 1703b, for processing and generating data, a transceiver 1705a, 1705b (also referred to as communication interface 1705a, 1705b), including, for instance, an transmitter, a receiver and an antenna, for exchanging data with the other components of the communication system 1700, and a non-transitory memory 1707a, 1707b for storing data. The processor 1703a, 1703b of the first user devices 1701a, 1701b may be implemented in hardware and/or software.

The hardware may comprise digital circuitry, or both analog and digital circuitry. Digital circuitry may comprise components such as application-specific integrated circuits (ASICs), field-programmable arrays (FPGAs), digital signal processors (DSPs), or general-purpose processors. The non-transitory memory 1707a, 1707b may store data as well as executable program code which, when executed by the processor 1703a, 1703b, causes the respective first user device 1701a, 1701b to perform the functions, operations and methods described in this disclosure.

In an example, the second network entity 1720, e.g. AMF 1720, may have a similar architecture as the first user devices 1701a/b, i.e. may comprise a processor 1723 for processing and generating data, a transceiver 1725 (also referred to as communication interface 1725) for exchanging data with the other components of the communication system 1300 as well as a memory 1727 for storing data. Likewise, as illustrated in figure 17, the network entity 1730, e.g. UDM 1730 may comprise a processor 1733 for processing and generating data, a transceiver 1735 (also referred to as communication interface 1735) for exchanging data with the other components of the communication system 1700 as well as a non-transitory memory 1737 for storing data.

In the following, the functionalities of the entities in Figure 17 are described in detail.

The network entity 1730 that may correspond to the UDM 212 described above with respect to Figures 2 to 16, can be used for managing user profile data of at least one first user device 1701a, 1701b that may correspond to the location reference UEs 111, 112, 113 described above with respect to Figure 1 or the UE 312 described above with respect to Figures 3 to 16, in a mobile communication network 1700 that may correspond to the mobile communication network 100 described above with respect to Figure 1. A second user device as described in the following may be a target UE, e.g. a target UE 120 as described above with respect to Figure 1.

The network entity 1730 comprises: a communication interface 1735, configured to obtain location reference capability information of the first user device 1701a, wherein the location reference capability information indicates the first user device 1701a is capable of assisting positioning for a second user device 120; and a processor 1733, configured to store the location reference capability information in the network entity.

The processor 1733 may be configured to store the location reference capability information within the user profile data of the first user device 1701a in the network entity 1730, 212.

The processor 1733 may be configured to store the location reference capability information in the network entity 1730, 212 based on a location reference identity identifying the first user device 1701a.

The user profile data of the first user device 1701a may comprise a state indication indicative of whether the first user device 1701a is activated or deactivated as a location reference.

The user profile data of the first user device 1701a may comprise a privacy profile indicative of privacy data of the first user device.

The privacy profile may comprise information indicative of whether the first user device 1701a is capable of at least one of: serving as a location reference allowed without notifying a user of the first user device, serving as a location reference allowed with notification to the user of the first user device 1701a, serving as a location reference requires notification and verification by the user of the first user device 1701a, serving as a location reference is allowed only if granted by the user of the first user device or if there is no response to the notification, serving as a location reference requires notification and verification by the user of the first user device, serving as a location reference is allowed only if granted by the user of the first user device.

The network entity 1730 may comprise a unified data management, UDM, entity 212, e.g. as shown in Figures 2 to 9.

The communication interface 1735 may be configured to receive from a second network entity 1720, 210 of the mobile communication network a request message, e.g. a request message 902 as shown in Figure 9, requesting a capability information of the first user device 1701a, wherein the capability information comprises the location reference capability information, and the request message comprises a location reference identity.

The second network entity 1720 may comprise an access and mobility management function, AMF, entity 210, e.g. as shown in Figures 2 to 9.

The location reference capability information comprises one or more parameters for positioning measurement, and the one or more parameters for positioning measurement comprise a number of antenna reference points.

The location reference capability information may further comprise at least one of: one or more parameters for positioning reference signal transmission, location information, and a capability for location determination indicating whether the first user device is capable of calculating a position of another device.

The one or more parameters for positioning measurement may further comprise at least one of: a list of supported frequency bands for positioning signal measurements, a number of frequency layer for the positioning signal measurements, a plurality of supported types of positioning signal measurements, a number of each type supported per first user device, and one or more parameters of each antenna reference point.

The one or more parameters for positioning reference signal transmission may comprise at least one of: a list of supported frequency bands for positioning signal transmission, a number of frequency layer for the positioning signal transmission, a number of antenna reference points for the positioning signal transmission, one or more parameters of each antenna reference point, one or more transmit power related parameters.

The location information may comprise at least one of: a location estimate of the first user device, a velocity estimate of the first user device, a location source, a location time stamp, an indication whether the first user device is manufactured as a location reference, a time duration for which the location information is valid.

The processor 1733 may be configured to store the location reference capability information within the user profile data of the first user device based on one of: a network registration of the first user device 1701a; a configuration of the first user device as a location reference by an application function, AF, entity; or a configuration of the first user device as a location reference by a location management function, LMF, entity.

The processor 1733 may be configured to update the state indication in the user profile data of the first user device 1701a based on an activation or deactivation of the user device as a location reference.

The second network entity 1720 that may correspond to the AMF 210 described above with respect to Figures 2 to 16, can be used for positioning operation.

The second network entity 1720, 210 may comprise: a communication interface 1725, configured to transmit a request message, e.g. a request message 902 as shown in Figure 9, to a network entity 1730, e.g. a UDM 212 as described above with respect to Figures 2 to 9, of the mobile communication network 1700, 100, wherein the request message 902 requesting a capability information of at least one first user device 1701a, 1701b, e.g. a first user device 111, 112, 113 as shown in Figure 1 or a first user device 312 as described above with respect to Figures 3 to 9, wherein the capability information comprises location reference capability information, and wherein the location reference capability information indicates the at least one first user device is capable of assisting positioning for a second user device, e.g. a second user device such as a target UE 120 shown in Figure 1.

The communication interface 1725 may be further configured to receive a location reference response, e.g. a location reference response 903 as shown in Figure 9, from the network entity 1730, 212, wherein the location reference response comprising a location reference capability information of the at least one first user device.

The request message 902 may comprise a location reference identity identifying the at least one first user device 1701a.

The location reference response 903 may comprise a state indication indicative of whether the at least one first user device 1701a is activated or deactivated as a location reference.

The location reference response 903 may comprise a privacy profile indicative of privacy data of the at least one first user device.

The privacy profile may comprise information indicative of whether the at least one first user device is capable of at least one of: serving as a location reference allowed without notifying a user of the at least one first user device, serving as a location reference allowed with notification to the user of the at least one first user device, serving as a location reference requires notification and verification by the user of the at least one first user device, serving as a location reference is allowed only if granted by the user of the at least one first user device or if there is no response to the notification, serving as a location reference requires notification and verification by the user of the at least one first user device, serving as a location reference is allowed only if granted by the user of the at least one first user device.

The second network entity 1720 may comprise an access and mobility management function, AMF, entity 210, e.g. as shown in Figures 2 to 9.

The network entity 1730, 212 may comprise a unified data management, UDM, entity, e.g. as shown in Figures 2 to 9.

The communication interface 1725 may be configured to receive a location request message of the second user device 120, the location request message comprising a type of request, wherein the type of request is indicative of an estimated location or location reference information.

The location request message may comprise geographical information indicative of an area of interest in which at least one first user device is required being capable of serving as a location reference for assisting positioning of the second user device.

The location request message may be a Mobile-Originated Location Request, MO-LR, message transmitted from the second user device to the second network entity, or a location request message from a third network entity, e.g. an LMF 311 as shown in Figure 3, to the second network entity upon request of the second user device for assistance data.

The communication interface 1725 may be configured to receive a location request message from the third network entity 311, wherein the third network entity may comprise a location management function, LMF, network entity 311.

The communication interface 1725 may be configured to activate or deactivate the at least one first user device 1701a as a location reference based on a location reference request from: a fourth network entity or, the at least one first user device requesting an activation or deactivation of the at least one first user device, or, an external client or an application function entity or based on an event indicating a deferred activation or deactivation of the at least one first user device,.

The location reference request may comprise at least one of the following: one or more location reference identities identifying first user devices, a number of first user devices capable of assisting positioning for the second user device, geographical information, time information, triggering conditions.

The first user device 1701a, 1701b, e.g. a location reference UE 111, 112, 113 as shown in Figure 1 or a UE 312 as described above with respect to Figures 3 to 9, may comprise a communication interface 1705a, 1705b configured to: receive from a second network entity 1720, 210 a request for capability information of the first user device; and transmit a response to the second network entity 1720, 210, the response comprising the capability information of the first user device, wherein the capability information comprises location reference capability information which indicates the first user device 1701a, 1701b, 111, 112, 113 is capable of assisting positioning for a second user device 120.

The location reference capability information comprises one or more parameters for positioning measurement, and the one or more parameters for positioning measurement comprise a number of antenna reference points.

The location reference capability information may further comprise at least one of: one or more parameters for positioning reference signal transmission, location information, and a capability for location determination indicating whether the first user device is capable of calculating a position of another device.

The one or more parameters for positioning measurement may further comprise at least one of: a list of supported frequency bands for positioning signal measurements, a number of frequency layer for the positioning signal measurements, a plurality of supported types of positioning signal measurements, a number of each type supported per first user device, and one or more parameters of each antenna reference point.

The one or more parameters for positioning reference signal transmission may comprise at least one of: a list of supported frequency bands for positioning signal transmission, a number of frequency layer for the positioning signal transmission, a number of antenna reference points for the positioning signal transmission, one or more parameters of each antenna reference point, one or more transmit power related parameters.

The location information comprises at least one of: a location estimate of the first user device, a velocity estimate of the first user device, a location source, a location time stamp, an indication whether the first user device is manufactured as a location reference, a time duration for which the location information is valid.

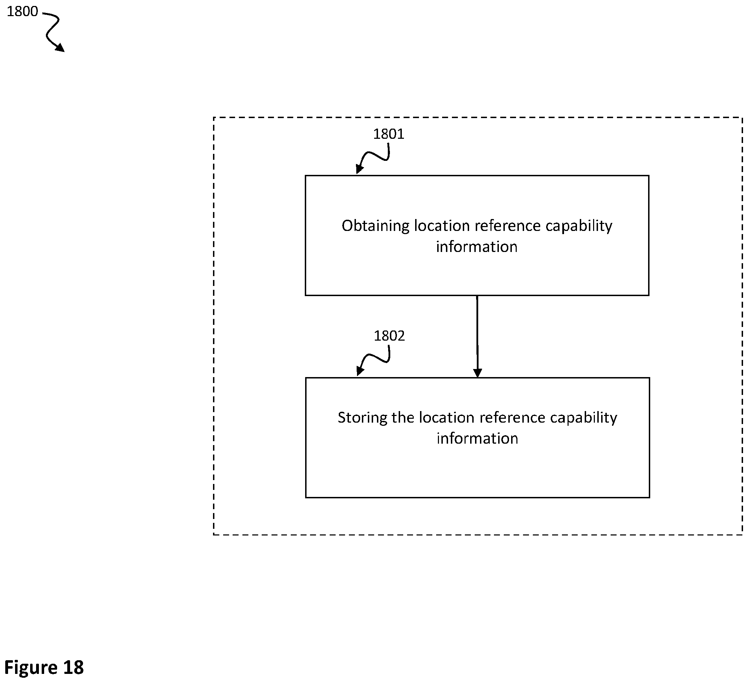

Fig. 18 shows a schematic diagram illustrating a method 1800 for managing user profile data according to the disclosure.

The method 1800 for managing user profile data of at least one first user device in a mobile communication network comprises: obtaining 1801 location reference capability information of the first user device, wherein the location reference capability information indicates the first user device is capable of assisting positioning for a second user device 120, e.g. as described above with respect to Figures 1 to 17 for the network entity 1730, e.g. UDM 212; and storing 1802 the location reference capability information in a network entity 1730, e.g. UDM 212.

The first user device may be a first user device 1701a, 1701b as described above with respect to Figure 17 or a UE 312 as described above with respect to Figures 3 to 16 or a location reference UE 111, 112, 113 as described above with respect to Figure 1. A second user device may be a target UE 120 as described above with respect to Figure 1.

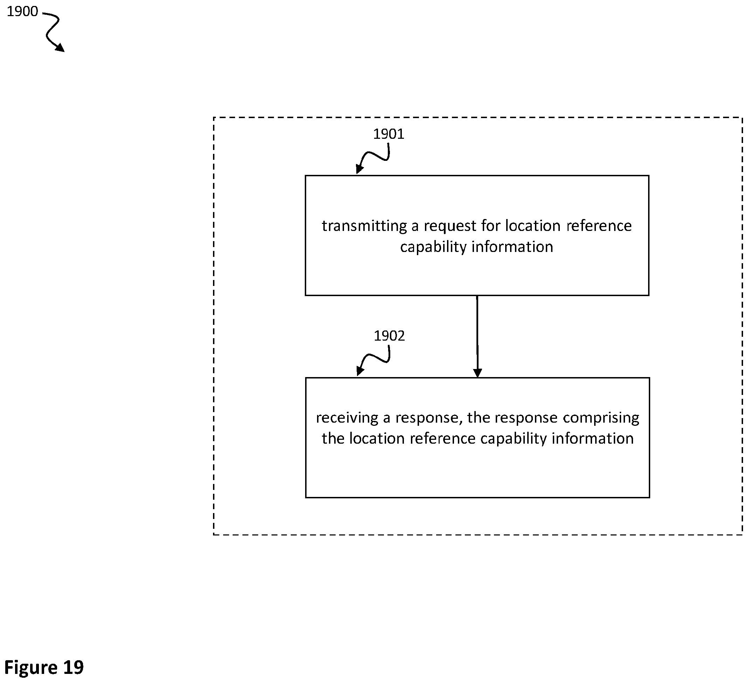

Fig. 19 shows a schematic diagram illustrating a method 1900 for providing user profile data of at least one first user device in a mobile communication network according to the disclosure. The first user device may be a first user device 1701a, 1701b as described above with respect to Figure 17 or a UE 312 as described above with respect to Figures 3 to 16 or a location reference UE 111, 112, 113 as described above with respect to Figure 1. A second user device may be a target UE 120 as described above with respect to Figure 1.

The method 1900 for providing user profile data of at least one first user device in a mobile communication network comprises: transmitting 1901 a request for location reference capability information of the at least one first user device to a network entity of the mobile communication network, wherein the location reference capability information indicates the at least one first user device is capable of assisting positioning for a second user device 120, e.g. as described above with respect to Figures 1 to 17 for the second network entity 1720, e.g. AMF 210 and, receiving 1902 a response from the network entity, the response comprising the location reference capability information.

The present disclosure also supports a computer program product including computer executable code or computer executable instructions that, when executed, causes at least one computer to execute the performing and computing steps described herein, in particular the methods and procedures described above. Such a computer program product may include a readable non-transitory storage medium storing program code thereon for use by a computer. The program code may perform the processing and computing steps described herein, in particular the methods and procedures described above.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

## Claims

1. A network entity (1730, 212) for managing user profile data of at least one first user device (1701a, 1701b, 111, 112, 113) in a mobile communication network (1700, 100), the network entity comprising:
a communication interface (1735), configured to obtain location reference capability information of the first user device (1701a), wherein the location reference capability information indicates the first user device (1701a) is capable of assisting positioning for a second user device (120); and
a processor (1733), configured to store the location reference capability information in the network entity; and
**characterized in that**
the location reference capability information comprises one or more parameters for positioning measurement, and the one or more parameters for positioning measurement comprise a number of antenna reference points.

2. The network entity (1730, 212) of claim 1, wherein the processor (1733) is configured to store the location reference capability information within the user profile data of the first user device (1701a) in the network entity (1730, 212).

3. The network entity (1730, 212) of claim 1 or 2, wherein the processor (1733) is configured to store the location reference capability information in the network entity (1730, 212) based on a location reference identity identifying the first user device (1701a).

4. The network entity (1730, 212) of any of the preceding claims, wherein the user profile data of the first user device (1701a) comprises a state indication indicative of whether the first user device (1701a) is activated or deactivated as a location reference.

5. The network entity (1730, 212) of any of the preceding claims, wherein the user profile data of the first user device (1701a) comprises a privacy profile indicative of privacy data of the first user device.

6. The network entity (1730, 212) of claim 5,
wherein the privacy profile comprises information indicative of whether the first user device (1701a) is capable of at least one of:
serving as a location reference allowed without notifying a user of the first user device,
serving as a location reference allowed with notification to the user of the first user device (1701a),
serving as a location reference requires notification and verification by the user of the first user device (1701a), serving as a location reference is allowed only if granted by the user of the first user device or if there is no response to the notification,
serving as a location reference requires notification and verification by the user of the first user device, serving as a location reference is allowed only if granted by the user of the first user device.

7. The network entity (1730, 212) of any of the preceding claims, comprising a unified data management, UDM, entity (1730, 212).

8. The network entity (1730, 212) of any of the preceding claims,
wherein the communication interface (1735) is configured to receive from a second network entity (1720, 210) of the mobile communication network a request message (902) requesting a capability information of the first user device (1701a), wherein the capability information comprises the location reference capability information, and the request message comprises a location reference identity.

9. The network entity (1730, 212) of claim 8, wherein the second network entity (1720, 210) comprises an access and mobility management function, AMF, entity.

10. The network entity (1730, 212) of any of the preceding claims, wherein the location reference capability information further comprises at least one of:
one or more parameters for positioning reference signal transmission,
location information,
a capability for location determination indicating whether the first user device is capable of calculating a position of another device.

11. The network entity (1730, 212) of any one of the preceding claims, wherein the one or more parameters for positioning measurement further comprise at least one of:
a list of supported frequency bands for positioning signal measurements,
a number of frequency layer for the positioning signal measurements,
a plurality of supported types of positioning signal measurements,
a number of each type supported per first user device,
one or more parameters of each antenna reference point.

12. The network entity (1730, 212) of claim 10 or 11, wherein the one or more parameters for positioning reference signal transmission comprise at least one of:
a list of supported frequency bands for positioning signal transmission,
a number of frequency layer for the positioning signal transmission,
a number of antenna reference points for the positioning signal transmission,
one or more parameters of each antenna reference point,
one or more transmit power related parameters.

13. The network entity (1730, 212) of any of claims 10 to 12, wherein the location information comprises at least one of:
a location estimate of the first user device,
a velocity estimate of the first user device,
a location source,
a location time stamp,
an indication whether the first user device is manufactured as a location reference,
a time duration for which the location information is valid.

14. The network entity (1730, 212) of any of the preceding claims,
wherein the processor is configured to store the location reference capability information within the user profile data of the first user device based on one of:
a network registration of the first user device (1701a);
a configuration of the first user device as a location reference by an application function, AF, entity; or
a configuration of the first user device as a location reference by a location management function, LMF, entity.

15. The network entity (1730, 212) of any of the preceding claims,
wherein the processor (1733) is configured to update the state indication in the user profile data of the first user device (1701a) based on an activation or deactivation of the user device as a location reference.

## Patentansprüche

1. Netzwerkeinheit (1730, 212) zum Verwalten von Benutzerprofildaten mindestens einer ersten Benutzervorrichtung (1701a, 1701b, 111, 112, 113) in einem Mobilkommunikationsnetzwerk (1700, 100), wobei die Netzwerkeinheit Folgendes umfasst:
eine Kommunikationsschnittstelle (1735), die dazu konfiguriert ist, Standortreferenzfähigkeitsinformationen der ersten Benutzervorrichtung (1701a) zu erlangen, wobei die Standortreferenzfähigkeitsinformationen angeben, dass die erste Benutzervorrichtung (1701a) in der Lage ist, eine Positionierung für eine zweite Benutzervorrichtung (120) zu unterstützen; und
einen Prozessor (1733), der dazu konfiguriert ist, die Standortreferenzfähigkeitsinformationen in der Netzwerkeinheit zu speichern; und
**dadurch gekennzeichnet, dass**
die Standortreferenzfähigkeitsinformationen einen oder mehrere Parameter zur Positionsmessung umfassen und der eine oder die mehreren Parameter zur Positionsmessung eine Anzahl von Antennenreferenzpunkten umfassen.

2. Netzwerkeinheit (1730, 212) nach Anspruch 1, wobei der Prozessor (1733) dazu konfiguriert ist, die Standortreferenzfähigkeitsinformationen in den Benutzerprofildaten der ersten Benutzervorrichtung (1701a) in der Netzwerkeinheit (1730, 212) zu speichern.

3. Netzwerkeinheit (1730, 212) nach Anspruch 1 oder 2, wobei der Prozessor (1733) dazu konfiguriert ist, die Standortreferenzfähigkeitsinformationen in der Netzwerkeinheit (1730, 212) basierend auf einer Standortreferenzidentität, welche die erste Benutzervorrichtung (1701a) identifiziert, zu speichern.

4. Netzwerkeinheit (1730, 212) nach einem der vorhergehenden Ansprüche, wobei die Benutzerprofildaten der ersten Benutzervorrichtung (1701a) eine Zustandsangabe umfassen, die angibt, ob die erste Benutzervorrichtung (1701a) als eine Standortreferenz aktiviert oder deaktiviert ist.

5. Netzwerkeinheit (1730, 212) nach einem der vorhergehenden Ansprüche, wobei die Benutzerprofildaten der ersten Benutzervorrichtung (1701a) ein Datenschutzprofil umfassen, das Datenschutzdaten der ersten Benutzervorrichtung angibt.

6. Netzwerkeinheit (1730, 212) nach Anspruch 5,
wobei das Datenschutzprofil Informationen umfasst, die angeben, ob die erste Benutzervorrichtung (1701a) zu mindestens einem der Folgenden in der Lage ist:
Dienen als eine Standortreferenz, die zulässig ist, ohne dass ein Benutzer der ersten Benutzervorrichtung benachrichtigt wird, Dienen als eine Standortreferenz, die mit einer Benachrichtigung an den Benutzer der ersten Benutzervorrichtung (1701a) zulässig ist,
Dienen als eine Standortreferenz erfordert eine Benachrichtigung und Überprüfung durch den Benutzer der ersten Benutzervorrichtung (1701a), Dienen als eine Standortreferenz ist nur zulässig, wenn sie durch den Benutzer der ersten Benutzervorrichtung genehmigt wurde oder wenn auf die Benachrichtigung keine Antwort erfolgt,
Dienen als eine Standortreferenz erfordert eine Benachrichtigung und Überprüfung durch den Benutzer des ersten Benutzervorrichtung, Dienen als eine Standortreferenz ist nur zulässig, wenn sie durch den Benutzer des ersten Benutzervorrichtung genehmigt wurde.

7. Netzwerkeinheit (1730, 212) nach einem der vorhergehenden Ansprüche, umfassend eine einheitliche Datenverwaltungseinheit, UDM-Einheit, (1730, 212).

8. Netzwerkeinheit (1730, 212) nach einem der vorhergehenden Ansprüche,
wobei die Kommunikationsschnittstelle (1735) dazu konfiguriert ist, von einer zweiten Netzwerkeinheit (1720, 210) des Mobilkommunikationsnetzwerks eine Anforderungsnachricht (902) zu empfangen, die Fähigkeitsinformationen der ersten Benutzervorrichtung (1701a) anfordert, wobei die Fähigkeitsinformationen die Standortreferenzfähigkeitsinformationen umfassen und die Anforderungsnachricht eine Standortreferenzidentität umfasst.

9. Netzwerkeinheit (1730, 212) nach Anspruch 8, wobei die zweite Netzwerkeinheit (1720, 210) eine Zugriffs- und Mobilitätsverwaltungsfunktions-Einheit, AMF-Einheit, umfasst.

10. Netzwerkeinheit (1730, 212) nach einem der vorhergehenden Ansprüche, wobei die Standortreferenzfähigkeitsinformationen ferner mindestens eines der Folgenden umfassen:
einen oder mehrere Parameter zur Positionsreferenzsignalübertragung,
Standortinformationen,
eine Standortbestimmungsfähigkeit, die angibt, ob die erste Benutzervorrichtung in der Lage ist, eine Position einer anderen Vorrichtung zu berechnen.

11. Netzwerkeinheit (1730, 212) nach einem der vorhergehenden Ansprüche, wobei der eine oder die mehreren Parameter zur Positionsmessung ferner mindestens eines der Folgenden umfassen:
eine Liste unterstützter Frequenzbänder für Positionssignalmessungen,
eine Anzahl von Frequenzschichten für die Positionssignalmessungen,
eine Vielzahl von unterstützten Arten von Positionssignalmessungen,
eine Anzahl jedes Typs, die pro erster Benutzervorrichtung unterstützt wird,
einen oder mehrere Parameter jedes Antennenreferenzpunkts.

12. Netzwerkeinheit (1730, 212) nach Anspruch 10 oder 11, wobei der eine oder die mehreren Parameter zur Positionsreferenzsignalübertragung mindestens eines der Folgenden umfassen:
eine Liste unterstützter Frequenzbänder zur Positionssignalübertragung,
eine Anzahl von Frequenzschichten für die Positionssignalübertragung,
eine Anzahl von Antennenreferenzpunkten für die Positionssignalübertragung,
einen oder mehrere Parameter jedes Antennenreferenzpunkts,
einen oder mehrere sendeleistungsbezogene Parameter.

13. Netzwerkeinheit (1730, 212) nach einem der Ansprüche 10 bis 12, wobei die Standortinformationen mindestens eines der Folgenden umfassen:
eine Standortschätzung der ersten Benutzervorrichtung,
eine Geschwindigkeitsschätzung der ersten Benutzervorrichtung,
eine Standortquelle,
einen Standort-Zeitstempel,
eine Angabe, ob die erste Benutzervorrichtung als eine Standortreferenz hergestellt wird,
eine Zeitdauer, für die die Standortinformationen gültig sind.

14. Netzwerkeinheit (1730, 212) nach einem der vorhergehenden Ansprüche,
wobei der Prozessor dazu konfiguriert ist, die Standortreferenzfähigkeitsinformationen in den Benutzerprofildaten der ersten Benutzervorrichtung basierend auf einem der Folgenden zu speichern:
einer Netzwerkregistrierung der ersten Benutzervorrichtung (1701a);
einer Konfiguration der ersten Benutzervorrichtung als eine Standortreferenz durch eine Anwendungsfunktionseinheit, AF-Einheit; oder
einer Konfiguration der ersten Benutzervorrichtung als eine Standortreferenz durch eine Standortverwaltungsfunktionseinheit, LMF-Einheit.

15. Netzwerkeinheit (1730, 212) nach einem der vorhergehenden Ansprüche,
wobei der Prozessor (1733) dazu konfiguriert ist, die Zustandsangabe in den Benutzerprofildaten der ersten Benutzervorrichtung (1701a) basierend auf einer Aktivierung oder Deaktivierung der Benutzervorrichtung als eine Standortreferenz zu aktualisieren.

## Revendications

1. Entité de réseau (1730, 212) pour gérer des données de profil utilisateur d'au moins un premier dispositif utilisateur (1701a, 1701b, 111, 112, 113) dans un réseau de communication mobile (1700, 100), l'entité de réseau comprenant :
une interface de communication (1735), configurée pour obtenir des informations de capacité de référence de localisation du premier dispositif utilisateur (1701a), dans laquelle les informations de capacité de référence de localisation indiquent que le premier dispositif utilisateur (1701a) est capable d'aider au positionnement d'un second dispositif utilisateur (120) ; et
un processeur (1733), configuré pour stocker les informations de capacité de référence de localisation dans l'entité de réseau ; et
**caractérisée en ce que**
les informations de capacité de référence de localisation comprennent un ou plusieurs paramètres de mesure de positionnement, et les un ou plusieurs paramètres de mesure de positionnement comprennent un nombre de points de référence d'antenne.

2. Entité de réseau (1730, 212) selon la revendication 1, dans laquelle le processeur (1733) est configuré pour stocker les informations de capacité de référence de localisation dans les données de profil d'utilisateur du premier dispositif utilisateur (1701a) dans l'entité de réseau (1730, 212).

3. Entité de réseau (1730, 212) selon la revendication 1 ou 2, dans laquelle le processeur (1733) est configuré pour stocker les informations de capacité de référence de localisation dans l'entité de réseau (1730, 212) sur la base d'une identité de référence de localisation identifiant le premier dispositif utilisateur (1701a).

4. Entité de réseau (1730, 212) selon l'une quelconque des revendications précédentes, dans laquelle les données de profil utilisateur du premier dispositif utilisateur (1701a) comprennent une indication d'état indiquant si le premier dispositif utilisateur (1701a) est activé ou désactivé en tant que référence de localisation.

5. Entité de réseau (1730, 212) selon l'une quelconque des revendications précédentes, dans laquelle les données de profil utilisateur du premier dispositif utilisateur (1701a) comprennent un profil de confidentialité indiquant des données de confidentialité du premier dispositif utilisateur.

6. Entité de réseau (1730, 212) selon la revendication 5,
dans laquelle le profil de confidentialité comprend des informations indiquant si le premier dispositif utilisateur (1701a) est capable d'au moins l'une des opérations suivantes :
servir de référence de localisation autorisée sans notifier un utilisateur du premier dispositif utilisateur,
servir de référence de localisation autorisée en notifiant l'utilisateur du premier dispositif utilisateur (1701a),
servir de référence de localisation nécessite une notification et une vérification par l'utilisateur du premier dispositif utilisateur (1701a), servir de référence de localisation n'est autorisé que si l'autorisation est accordée par l'utilisateur du premier dispositif utilisateur ou en l'absence de réponse à la notification,
servir de référence de localisation nécessite une notification et une vérification par l'utilisateur du premier dispositif utilisateur, servir de référence de localisation n'est autorisé que si l'autorisation est accordée par l'utilisateur du premier dispositif utilisateur.

7. Entité de réseau (1730, 212) selon l'une quelconque des revendications précédentes, comprenant une entité de gestion de données unifiée, UDM (1730, 212).

8. Entité de réseau (1730, 212) selon l'une quelconque des revendications précédentes,
dans laquelle l'interface de communication (1735) est configurée pour recevoir d'une seconde entité de réseau (1720, 210) du réseau de communication mobile, un message de demande (902) demandant des informations de capacité du premier dispositif utilisateur (1701a), dans laquelle les informations de capacité comprennent les informations de capacité de référence de localisation, et le message de demande comprend une identité de référence de localisation.

9. Entité de réseau (1730, 212) selon la revendication 8, dans laquelle la seconde entité de réseau (1720, 210) comprend une entité de fonction de gestion d'accès et de mobilité, AMF.

10. Entité de réseau (1730, 212) selon l'une quelconque des revendications précédentes, dans laquelle les informations de capacité de référence de localisation comprennent également au moins l'un des éléments suivants :
un ou plusieurs paramètres de transmission de signal de référence de positionnement,
des informations de localisation,
une capacité de détermination de localisation indiquant si le premier dispositif utilisateur est capable de calculer la position d'un autre dispositif.

11. Entité de réseau (1730, 212) selon l'une quelconque des revendications précédentes, dans laquelle les un ou plusieurs paramètres de mesure de positionnement comprennent également au moins l'un des éléments suivants :
une liste de bandes de fréquences prises en charge pour les mesures de signal de positionnement,
un nombre de couches de fréquence pour les mesures de signal de positionnement,
une pluralité de types de mesures de signal de positionnement pris en charge,
un nombre de chaque type pris en charge par premier dispositif utilisateur,
un ou plusieurs paramètres de chaque point de référence d'antenne.

12. Entité de réseau (1730, 212) selon la revendication 10 ou 11, dans laquelle les un ou plusieurs paramètres de transmission de signal de référence de positionnement comprennent au moins l'un des éléments suivants :
une liste de bandes de fréquences prises en charge pour la transmission de signal de positionnement,
un nombre de couches de fréquence pour la transmission de signal de positionnement,
un nombre de points de référence d'antenne pour la transmission de signal de positionnement,
un ou plusieurs paramètres de chaque point de référence d'antenne,
un ou plusieurs paramètres liés à la puissance de transmission.

13. Entité de réseau (1730, 212) selon l'une quelconque des revendications 10 à 12, dans laquelle les informations de localisation comprennent au moins l'un des éléments suivants :
une estimation de la localisation du premier dispositif utilisateur,
une estimation de la vitesse du premier dispositif utilisateur,
une source de localisation,
un horodatage de localisation,
une indication précisant si le premier dispositif utilisateur est préparé comme référence de localisation,
une durée pendant laquelle les informations de localisation sont valides.

14. Entité de réseau (1730, 212) selon l'une quelconque des revendications précédentes,
dans laquelle le processeur est configuré pour stocker les informations de capacité de référence de localisation dans les données de profil utilisateur du premier dispositif utilisateur sur la base de l'un des éléments suivants :
un enregistrement réseau du premier dispositif utilisateur (1701a) ;
une configuration du premier dispositif utilisateur en tant que référence de localisation par une entité de fonction d'application, AF ; ou
une configuration du premier dispositif utilisateur en tant que référence de localisation par une entité de fonction de gestion de localisation, LMF.

15. Entité de réseau (1730, 212) selon l'une quelconque des revendications précédentes,
dans laquelle le processeur (1733) est configuré pour mettre à jour l'indication d'état dans les données de profil utilisateur du premier dispositif utilisateur (1701a) sur la base d'une activation ou d'une désactivation du dispositif utilisateur en tant que référence de localisation.
